# EUROPÄISCHE PATENTSCHRIFT

(11) **EP 3 847 091 B1**
(45) Veröffentlichungstag und Bekanntmachung des Hinweises auf die Patenterteilung: **30.08.2023**
(21) Anmeldenummer: 19762384.6
(22) Anmeldetag: 02.09.2019
(51) Int. Cl.: B63B 1/08, B63H 5/16, B63B 1/04, B63H 5/08

(54) **SCHIFFSRUMPF MIT EINER ERHÖHUNG IM BEREICH EINER UNTERSEITE DES SCHIFFSRUMPF**
SHIP HULL HAVING A RAISED PORTION IN THE REGION OF AN UNDERSIDE OF THE SHIP HULL
COQUE DE NAVIRE AVEC UNE ÉLÉVATION DANS LA ZONE D'UN CÔTÉ INFÉRIEUR DE LA COQUE DE NAVIRE

(30) Priorität: 03.09.2018 DE 102018121414
(43) Veröffentlichungstag der Anmeldung: 14.07.2021
(73) Patentinhaber: LR-Shipdesign AG, 6340 Baar (CH)
(72) Erfinder: LINDINGER, Roland, 5642 Mühlau, Kanton Aargau (CH)
(74) Vertreter: Hofstetter, Schurack & Partner
(86) Internationale Anmeldenummer: PCT/EP2019/073374
(87) Internationale Veröffentlichungsnummer: WO 2020/048933

(56) Entgegenhaltungen:
- EP-A2- 1 203 715
- DE-A1-102010 036 069
- JP-U- S6 057 498
- US-A- 2 729 182
- US-A- 4 550 673

## Beschreibung

Die Erfindung betrifft einen Schiffsrumpf mit einer Erhöhung einer Außenkontur des Schiffsrumpfs in Bezug auf eine nach oben gerichtete Vertikalrichtung des Schiffsrumpfs im Bereich eines ersten und zweiten Spantenrisses gegenüber einem an die Erhöhung unmittelbar angrenzenden Oberflächenabschnitt. Insbesondere ist ein Schiffsrumpf für ein Container-Schiff angesprochen.

Container-Schiffe befördern häufig eine Vielzahl von Gütern. Dabei transportieren Container-Schiffe in der Regel deutlich schwerere Lasten als ein Luftfahrzeug. Große moderne Container-Schiffe können eine Ladungskapazität von mehreren tausend Tonnagen besitzen. Die dabei transportierte Masse der Container übersteigt dabei meistens die Ladungskapazität eines Luftfahrzeuges deutlich. Ein Großteil der Güter wird im weltweiten Handel per Container-Schiff transportiert. Dieser Transport von Gütern benötigt einen entsprechend hohen Energieeinsatz.

Diese Energie wird meistens aus einem Kraftstoff, insbesondere Schiffsdiesel, gewonnen. Aufgrund des zunehmenden Wettbewerbs im Rahmen der Globalisierung stehen weltweit die Reeder in der Schifffahrt vor großen Herausforderungen. Bereits jetzt stellen die Treibstoffkosten einen Hauptbestandteil der Betriebskosten für die Reeder dar. Zusätzlich sehen sich die Reeder mit Herausforderungen betreffend den Umweltschutz konfrontiert. Dies kann die Reeder bereits jetzt zu hohen Investitionen nötigen, was sich negativ auf die entsprechenden Margen auswirken kann.

Die Offenlegungsschrift DE 10 2010 036 069 A1 beschreibt ein Strömungssystem für den Schiffsbau. Es wird eine spezielle Formgebung im Rumpfboden für Ein-Rumpf und Mehr-Rumpf-Schiffe für alle Schiffsbauformen ohne seitliche Auftriebskörper beschrieben.

Die Druckschrift US 2014/0083346 A1 offenbart ein Boot zum Wakesurfen und einen Schiffsrumpf für ein Wakesurfboot. Der Schiffsrumpf beinhaltet einen Boden mit einer vorgegebenen Länge, die sich von einem Bug bis zu einem Heck erstreckt. Am Boden des Schiffsrumpfs befindet sich eine zentrale Rippe sowie eine Steuerbord- und Backbordrippe, welche sich an der Steuerbordseite zur Backbordseite erstrecken und so im Wesentlichen eine M-Form definieren. Ein Trimkeil erstreckt sich unterhalb des Hecks. Zwei abgerundete Heckteile sind in der Nähe des Hecks vorgesehen. Das Wakesurfboot sieht mehrere befüllbare Belasttanks vor. Das Wakesurfboot dient zum Erzeugen von Kielwellen. Mit Hilfe unterschiedlicher Betriebszustände des Wakesurfboots können unterschiedliche Kielwellen hinsichtlich der Form, Steigung und Stärke erzeugt werden.

Die Druckschrift US 1,599,312 A beschreibt einen Schiffsrumpf, welcher im vorderen Bereich seine größte Breite des Trägers aufweist, der über einen im Wesentlichen flachen Bodenbereich ansteigt. Der Propeller und das Ruder sind unter dem Rumpf hinter dem longitudinalen Zentrum und am Zusammenfluss zweier Kanäle mit dem einzigen Kanal angeordnet. Der beschriebene Schiffsrumpf hat im vorderen Bereich seine größte Breite eines Strahls. Dieser Strahl steigt gegenüber einem flachen Boden an. Dabei beginnen die Kanäle in diesem Bereich mit dem flachen Boden und erstrecken sich nach hinten. Dort vereinigen sich die Kanäle zu einem einzigen Kanal.

Ferner offenbart die Druckschrift US 2 729 182 A einen Schiffsrumpf mit Mehrschraubenantrieb. Jede Antriebswelle besitzt eine strömungsgünstige Verkleidung.

Es ist Aufgabe der vorliegenden Erfindung, einen Schiffsrumpf bereitzustellen, der einen effizienteren Betrieb eines Schiffes ermöglicht.

Diese Aufgabe wird durch die unabhängigen Patentansprüche dieser Anmeldung sinnvoll gelöst. Vorteilhafte Weiterbildungen und alternative Ausgestaltungsformen sind in den Unteransprüchen, der Beschreibung sowie den Figuren gegeben.

Die Erfindung sieht einen Schiffsrumpf mit einer Erhöhung einer Außenkontur des Schiffsrumpfs in Bezug auf eine nach oben gerichtete Vertikalrichtung des Schiffsrumpfs im Bereich eines ersten und zweiten Spantenrisses gegenüber einem an die Erhöhung unmittelbar angrenzenden Oberflächenabschnitt vor. Dabei befindet sich vorzugsweise der zweite Spantenriss gegenüber dem ersten Spantenriss näher an einem Achterschiff des Schiffsrumpfs. Der Schiffsrumpf ist insbesondere für ein Container-Schiff, einen Bulkcarrier oder einen Tanker ausgelegt. Anstelle des Begriffs Bulkcarrier wird oft auch der Begriff Massengutfrachter verwendet. Jedoch kann der vorgeschlagene Schiffsrumpf auch für kleinere Schiffe, Boote sowie für alle anderen Frachtschiffe eingesetzt werden. Mit dem Begriff Container-Schiff sind zum Beispiel 400-Meter-Container-Schiffe oder 200-Meter-Container-Schiffe angesprochen.

Die Erhöhung ist in einem Bereich zwischen einer Mitte und einem Heck des Schiffsrumpfs angeordnet. Die Erhöhung kann sich in einem Bereich zwischen einem Mittschiffs und dem Heck des Schiffsrumpfs befinden, wobei die Erhöhung sich auf einer Unterseite des Schiffsrumpfes befindet. Die Erhöhung ist somit auf der Unterseite des Schiffsrumpfs angeordnet. Dies bedeutet, dass die Erhöhung des Schiffsrumpfs im Bereich eines Unterwasserschiffes des Schiffsrumpfs befindlich ist. Bei einem auf einer Wasseroberfläche fahrenden Schiff ist demnach die Erhöhung nicht zu sehen oder zumindest nicht vollständig zu sehen, da sie in diesem Fall unterhalb der Wasserlinie angeordnet ist. Mithilfe dieser Erhöhung kann eine Wasserströmung im Bereich der Erhöhung hinsichtlich eines Antriebs des Schiffs effizienter als bisherige Schiffsrümpfe genutzt werden.

Die Außenkontur in dem ersten Spantenriss, der in einem bugseitigen Bereich der Erhöhung verläuft, weist einen ersten Wendepunkt und einen zweiten Wendepunkt auf. Der bugseitige Bereich ist der Erhöhung ist dem Bug des Schiffsrumpfes zugewandt. Insbesondere ist jener Teil der Außenkontur des ersten Spantenrisses angesprochen, welcher unterhalb der Wasserlinie, also im Bereich des Unterwasserschiffs verläuft. Insbesondere kann die Erhöhung in Querrichtung mittig angeordnet sein. Die Außenkontur erreicht in dem ersten Spantenriss in einem Bereich einer Mitte der Erhöhung einen maximalen Wert in Bezug auf die Vertikalrichtung. Würde man den Schiffsrumpf von unten betrachten, so würde die Erhöhung tendenziell wie eine "Delle" aussehen, die sich in Richtung der Wasserlinie nach oben wölbt. Die Erhöhung ist vorzugsweise mittig in dem ersten Spantenriss angeordnet. Ein Spantenriss stellt einen Querschnitt durch den Schiffsrumpf dar. Er kann auch als vertikaler Schnitt in Querrichtung durch den Schiffsrumpf beschrieben werden. Die Querrichtung verläuft dabei meistens senkrecht zu einer Längsrichtung, welche den Bug mit dem Heck verbindet.

An den seitlichen Enden der Außenkontur des ersten Spantenrisses kann die Außenkontur ähnlich wie bei einem gewöhnlichen Container-Schiff verlaufen. Zur Mitte des Spantenrisses steigt diese Außenkontur jedoch meist an, sodass sich daraus die Erhöhung ergibt. Da die Erhöhung im Bereich einer Mitte des ersten Spantenrisses einen maximalen Wert erreicht, flacht der Anstieg der Außenkontur im Bereich der Mitte ab. Dies bedeutet zwangläufig, dass die Außenkontur in dem ersten Spantenriss einen ersten und zweiten Wendepunkt aufweist. Der erste und zweite Wendepunkt sind dabei meistens im Bereich der Erhöhung angeordnet. In der Regel kann ein Abstand des ersten Wendepunkts zum zweiten Wendepunkt mehrere Meter betragen. Der genaue Abstand hängt jedoch insbesondere von einer Lage des ersten Spantenrisses ab. Insbesondere kann die Außenkontur des ersten Spantenrisses genau zwei Wendepunkte aufweisen. Der erste Wendepunkt kann beispielsweise auf einer linken Seite der Erhöhung, der zweite Wendepunkt kann auf einer rechten Seite der Erhöhung platziert sein. Die Außenkontur des ersten Spantenrisses stellt dabei vorzugsweise eine Begrenzungslinie des Schiffsrumpfs dar. Dies bedeutet, dass die Außenkontur des ersten Spantenrisses eine Begrenzung der Oberfläche des Schiffsrumpfs kennzeichnet. Die sich aus dem ersten Spantenriss ergebende Fläche kann zum Beispiel einen Motorraum für einen Schiffsmotor, Kabinen, etc. beinhalten. Vorzugsweise ist die Außenkontur des ersten Spantenrisses mathematisch differenzierbar. Dies gilt insbesondere für die Außenkontur im Bereich der Erhöhung. Dies kann bedeuten, dass die Außenkontur des ersten Spantenrisses zumindest im Bereich der Erhöhung keinerlei Knicke oder Stufen aufweist.

Die Außenkontur in dem zweiten Spantenriss, der gegenüber dem ersten Spantenriss sich näher am Heck des Schiffsrumpfs befindet, weist mittig in der Erhöhung eine erste Vertiefung mit einem dritten Wendepunkt und einem vierten Wendepunkt auf. Die erste Vertiefung ist dabei Teil einer Haltevorrichtung für eine Schiffspropellerwelle zum Aufnehmen eines Schiffspropellers. Die Haltevorrichtung kann auch als "Afterbow" oder als "Heckwulst" bezeichnet werden. Diese Haltevorrichtung ragt insbesondere vertikal nach unten aus der Erhöhung heraus und ist bevorzugt mittig in der Erhöhung angeordnet. Die Haltevorrichtung kann Teil des Schiffsrumpfs sein, was bedeutet, dass der Schiffsrumpf inklusive der Haltevorrichtung einteilig oder mehrteilig ausgeführt sein kann. Alternativ ist es möglich, dass die Haltevorrichtung als separate Komponente mit dem Schiffsrumpf verbunden wird. In Querrichtung geht die Haltevorrichtung insbesondere in die Erhöhung über. Somit kann die Erhöhung die Haltevorrichtung umgeben. Vorzugsweise beinhaltet diese Haltevorrichtung die Schiffspropellerwelle, welche mithilfe eines Schiffsmotors den Schiffspropeller antreiben kann.

Der Schiffspropeller wurde früher oft als Schiffsschraube bezeichnet. Diese beiden Begriffe werden in dieser Anmeldung als Synonyme verwendet. Statt Schiffspropeller kann auch das Wort Propeller verwendet werden. Schiffspropeller sind meistens Elemente einer Strömungsmaschine, die mechanische Arbeit aufnehmen und diese in Form von Strömungsenergie an das sie umgebende Medium abgeben. Das umgebende Medium ist bei Schiffen meistens Wasser, bei Luftfahrzeugen Luft. Damit ist sowohl Süßwasser als auch Salzwasser angesprochen. Schiffspropeller sind oft Teil einer Arbeitsmaschine. Sie nehmen in der Regel Energie vom Schiffsmotor auf und wandeln diese Energie in einen Antrieb des Schiffs um. Schiffspropeller weisen in der Regel Flügel auf, die so geformt und ausgerichtet sind, dass sie bei einer Rotationsbewegung vom Wasser schräg oder asymmetrisch umströmt werden. Die Größe und Masse von Schiffspropellern kann je nach Schiffart und Einsatzzweck stark variieren. Bei einem Container-Schiff kann der Schiffspropeller einen Durchmesser von 10 m und das dazugehörige Containerschiff eine Ladungskapazität von über 1000 TEU (Tonnagen) erreichen. Bei kleineren Schiffen oder Booten kann der Schiffspropeller entsprechend kleiner sein beziehungsweise deutlich weniger Masse aufweisen als ein Propeller eines großen Container-Schiffes.

Die Außenkontur des zweiten Spantenrisses befindet sich näher am Heck als die Außenkontur des ersten Spantenrisses. Die Außenkontur des ersten Spantenrisses kann im Bereich der Erhöhung als wannenförmig oder topfförmig beschrieben werden. Sie steigt ausgehend von einem Bereich der Unterseite des Unterwasserschiffs in Richtung der Erhöhung nach oben in Richtung einer vorgegebenen Wasserlinie an und erreicht ein maximales Niveau. Im Gegensatz dazu verlässt die Außenkontur des zweiten Spantenrisses im Bereich dieses maximalen Niveaus die Erhöhung wieder. Seitlich der Vertiefung kann jedoch immer noch eine Erhöhung erkannt werden. Insbesondere befindet sich seitlich der ersten Vertiefung im zweiten Spantenriss die Erhöhung mit dem dazugehörigen maximalen Niveau. Man kann sagen, dass die Erhöhung seitlich um die Haltevorrichtung verläuft, wobei die Erhöhung die Haltevorrichtung zum Heck hin nicht vollständig von der Erhöhung umgeben ist. Die Außenkontur des zweiten Spantenrisses steigt insbesondere ausgehend von dem angrenzenden Oberflächenabschnitt in Richtung der Erhöhung über den dritten Wendepunkt nach oben an. Die Außenkontur kann auch im zweiten Spantenriss im Bereich der Erhöhung einen weiteren maximalen Wert erreichen, fällt dann jedoch mittig im Bereich der Erhöhung über den fünften Wendepunkt nach unten ab. Dabei kann die Außenkontur des zweiten Spantenrisses einen minimalen Wert im Bereich der ersten Vertiefung erreichen. Dieser minimale Wert kann als ein lokales oder sogar globales Minimum betreffend den Schiffsrumpf ausgebildet sein.

Die Außenkontur des zweiten Spantenrisses kann im weiteren Verlauf über den sechsten Wendepunkt wieder ansteigen. Sie erreicht dann bevorzugt dasselbe maximale Niveau wie zwischen dem dritten und fünften Wendepunkt. Die Außenkontur des zweiten Spantenrisses kann im weiteren Verlauf über den vierten Wendepunkt wieder abfallen. Die Außenkontur des zweiten Spantenrisses im Bereich zwischen dem dritten und vierten Wendepunkt ist insbesondere Teil der Erhöhung, auch wenn die erste Vertiefung vorhanden ist. Vorzugsweise ist der gesamte Schiffsrumpf entlang einer vorgegebenen Mittellinie symmetrisch. Dies bedeutet, dass ebenfalls die Außenkonturen der Spantenrisse symmetrisch sein können. Weist das Container-Schiff mehrere Schiffspropeller auf, so können entsprechend mehrere Symmetrieachsen vorhanden sein. Der dargestellte Verlauf der Außenkonturen des ersten und zweiten Spantenrisses kann demnach mehrfach bei einem Schiffsrumpf auftreten.

Die Außenkontur in dem zweiten Spantenriss weist einen fünften Wendepunkt und einen sechsten Wendepunkt auf. Dabei liegt der dritte Wendepunkt gegenüber dem fünften Wendepunkt in Bezug auf die erste Vertiefung quer zum Schiffsrumpf weiter außen und der vierte Wendepunkt liegt gegenüber dem sechsten Wendepunkt in Bezug auf die erste Vertiefung weiter außen quer zum Schiffsrumpf. Dies bedeutet, dass der fünfte Wendepunkt und der sechste Wendepunkt näher an einer Mitte der Erhöhung beziehungsweise an einer Symmetrieachse für die Erhöhung liegen können. Der dritte und vierte Wendepunkt liegen dabei in der Regel quer zum Schiffsrumpf weiter außen entfernt.

Quer zum Schiffsrumpf kann vor allem eine Richtung bedeuten, die senkrecht zur Längsrichtung ausgebildet ist. Dabei kann weiter außen bedeuten, dass ein Abstand in Querrichtung zu der Mittellinie vergrößert ist. Wenn der dritte Wendepunkt gegenüber dem fünften Wendepunkt weiter außen liegt, kann dies bedeuten, dass ein Abstand vom dritten Wendepunkt zur Mittellinie größer ist als ein Abstand vom fünften Wendepunkt zur Mittellinie. Die Mittellinie kann je nach Schiffsrumpf zugleich die Symmetrieachse des Schiffsrumpfs sein. In diesem Fall befinden sich der dritte und vierte Wendepunkt näher an einer Seite des Schiffsrumpfs als der fünfte und sechste Wendepunkt. Dabei bedeutet der Begriff "seitlich" eine Querrichtung des Schiffsrumpfs. Diese Querrichtung steht vorzugsweise senkrecht auf einer Längsrichtung des Schiffsrumpfs. Vereinfach gesagt bedeutet "seitlich" etwas Ähnliches wie "links" beziehungsweise "rechts" vom Schiffsrumpf, wenn man den Schiffsrumpf aus der Perspektive eines Spantenrisses betrachtet.

Die Außenkontur weist in einem Längsschnitt des Schiffsrumpfs entlang einer vorgegebenen Mittellinie der Erhöhung bugseitig im Bereich der Erhöhung einen siebten Wendepunkt auf. Die Mittellinie kann dabei durch eine Mitte der Erhöhung verlaufen und teilt diese Erhöhung vorzugsweise symmetrisch. Heckseitig weist diese Außenkontur des Längsschnitts einen achten Wendepunkt auf. Die Außenkontur geht heckseitig über einen achten Wendepunkt aus der Erhöhung in die erste Vertiefung über. Bugseitig grenzt die Erhöhung insbesondere an den angrenzenden Oberflächenabschnitt an.

Ausgehend von diesem Oberflächenabschnitt kann die Außenkontur über den siebten Wendepunkt in die Erhöhung des Schiffsrumpfs übergehen. Dabei kann die Außenkontur in Richtung der Wasserlinie ansteigen und einen maximalen Wert beziehungsweise ein maximales Niveau erreichen. Im Bereich dieses maximalen Niveaus kann die Erhöhung horizontal verlaufen. Sie kann jedoch auch gewölbt sein oder eine Kombination aus horizontaler Fläche und gewölbter Fläche sein. Die Außenkontur des Längsschnitts auf der Unterseite des Schiffsrumpfs kann ausgehend vom maximalen Niveau zunächst horizontal verlaufen. Im weiteren Verlauf der Außenkontur in Richtung des Hecks fällt die Außenkontur nach unten ab und verlässt somit das maximale Niveau der Erhöhung. Dabei geht die Außenkontur über den achten Wendepunkt in die erste Vertiefung über. Dieser Übergang ist insbesondere kontinuierlich. Dabei kann die erste Vertiefung tiefer angeordnet sein als der angrenzende Oberflächenabschnitt im bugseitigen Bereich der Erhöhung. Die Außenkontur des Längsschnitts kann weiterhin in den Bereich des Schiffspropellers übergehen. Der sich daraus ergebende Verlauf der Außenkontur des Längsschnitts im Bereich des Unterwasserschiffs kann als eine nach oben gerichtete Wanne beschrieben werden, die jedoch in aus Sicht des Längsschnitts nicht symmetrisch ist. Dies liegt insbesondere daran, dass die erste Vertiefung ein unterschiedliches vertikales Niveau im Vergleich zu dem angrenzenden Oberflächenabschnitt im bugseitigen Bereich der Erhöhung aufweisen kann. Die Außenkontur kann von dem Bugbereich kommend zunächst über den siebten Wendepunkt ansteigen, das maximale Niveau der Erhöhung erreichen und aus der Erhöhung über den achten Wendepunkt wieder abfallen. Über den achten Wendepunkt geht die Außenkontur in die erste Vertiefung über und kann den Schiffspropeller erreichen.

Des Weiteren gleicht sich am heckseitigen Ende der Erhöhung entlang des Längsschnitts in Richtung des Hecks eine vertikale Position der Erhöhung mit einer vertikalen Position des dazu angrenzenden Oberflächenabschnitts an. Bevor entlang des Längsschnitts das Heck des Schiffsrumpfs erreicht wird, kann der angrenzende Oberflächenabschnitt eine unterschiedliche vertikale Position aufweisen als die Erhöhung. Diese beiden unterschiedlichen vertikalen Positionen oder Niveauhöhen reduzieren sich insbesondere zunehmend in Richtung des Hecks, bis dieser Unterschied der vertikalen Positionen vollständig verschwindet. Dieses Angleichen erfolgt dabei meistens nicht abrupt, sondern vorzugsweise kontinuierlich.

Dieses Angleichen der vertikalen Position der Erhöhung mit der vertikalen Position des dazu angrenzenden Oberflächenabschnitts kann nicht nur entlang des Längsschnitts der Mittellinie gelten, sondern auch für weitere Längsschnitte, die seitlich zur Mittellinie versetzt sind, jedoch durch die Erhöhung verlaufen. So kann zum Beispiel ebenfalls ein Längsschnitt angesprochen sein, der die Erhöhung nicht wie die Mittellinie hälftig teilt, sondern im Bereich von beispielsweise ein Viertel der Querausdehnung der Erhöhung verläuft. In diesem Fall würde ein solcher Längsschnitt die Erhöhung in zwei Teilbereiche aufteilen, die flächenmäßig unterschiedlich groß sind. Auch in diesem Fall kann das Angleichen der genannten vertikalen Positionen erfolgen.

Anders ausgedrückt kann der Oberflächenabschnitt nach hinten in Richtung des Hecks die Erhöhung zumindest nicht vollständig umschließen. Dies bedeutet insbesondere, dass die Erhöhung nach hinten offen ist beziehungsweise nicht komplett abschließt. Somit kann die Erhöhung eine nach hinten offene Form ergeben. Diese nach hinten offene Form kann im Bereich des Unterwasserschiffs des Schiffsrumpfs angeordnet sein.

Diese Form beziehungsweise Formgebung des Schiffsrumpfs ist bereits durch die Formgebung des Schiffsrumpfs gegeben und wird nicht während eines Betriebs des Schiffes erzeugt. Somit stellt ein Öffnen einer Klappe, wie sie zum Beispiel bei Fährschiffen oft vorzufinden ist, keine nach hinten offene Form im Sinne dieser Anmeldung dar. Diese Formgebung, die nach hinten offen aussieht, kann aufgrund der Formgebung des Schiffsrumpfs ständig und permanent gegeben sein. Aufgrund dieser Formgebung des Schiffsrumpfs gemäß Anspruch 1 ergeben sich weniger hydrodynamische Widerstände im Bereich der Wasserströmung um den Schiffsrumpf herum. Das verdrängte Wasser kann unter Druck entlang der Schiffshülle besser in Richtung des Schiffspropellers geleitet werden. Aufgrund der Erhöhung in dem Schiffsrumpf wird mehr Wasser zum Schiffspropeller gelenkt als ohne die Erhöhung.

Je nach Auslegung des Schiffs beziehungsweise der Abmessungen der Erhöhung können bis ca. 10 Prozent der Treibstoffmenge eingespart werden. Daraus resultiert ein gewaltiges Potential hinsichtlich einer Kosteneinsparung sowie einer verminderten Emission von Treibhausgasen. Damit kann der so vorgeschlagene Schiffsrumpf ein deutlich effizienteres Betreiben von Container-Schiffen ermöglichen und zugleich einen gewaltigen Beitrag für den Umweltschutz liefern. Da gerade im Bereich des Schiffsverkehrs im Vergleich zum Straßenverkehr gewaltige Mengen an Treibhausgasen emittiert werden, ist der Beitrag zum Umweltschutz beziehungsweise Klimaschutz durch den vorgeschlagenen Schiffsrumpf als nicht zu gering einzuschätzen.

Die Außenkontur des Längsschnitts kann genau zwei Wendepunkte im Bereich der Erhöhung aufweisen. Diese beiden Wendepunkte sind dabei der siebte und der achte Wendepunkt. Die Außenkontur in dem zweiten Spantenriss kann insbesondere genau vier, oder wie in einem späteren Beispiel gezeigt ist, genau sechs Wendepunkte aufweisen. Die Außenkontur des ersten Spantenrisses kann im Bereich der Erhöhung genau zwei Wendepunkte aufweisen, welche der erste und der zweite Wendepunkt sind. Eine mögliche Festlegung einer definierten Anzahl von Wendepunkten im Verlauf der Außenkontur im Bereich der Erhöhung soll klarstellen, dass der Verlauf der Außenkontur einer Systematik folgt. So steigt beispielsweise die Außenkontur in dem zweiten Spantenriss im Bereich des dritten Wendepunkts in Richtung der Erhöhung an. Dabei ist es jedoch unbeachtlich, wenn aufgrund einer kleinen Rille, einer bautechnischen Fertigungstoleranz oder aufgrund sonst eines Grundes der Verlauf der Außenkontur geringfügig von der vorgeschlagenen Form abweicht. Entscheidend ist hierbei der gesamte Verlauf der Außenkontur beziehungsweise die gesamte Form der Erhöhung in dem Schiffsrumpf. Minimale Abweichungen von der Formgebung, die in dieser Anmeldung beschrieben werden, sind ebenfalls im Rahmen dieser Anmeldung erfasst. Eine minimale Abweichung kann beispielsweise vorhanden sein, wenn der die Abweichung betreffende Bereich oder Form eine räumliche Ausdehnung hat, die geringer als 1 % einer Breite der Erhöhung ist.

Eine weitere Variante nach dem unabhängigen Anspruch 2 beschreibt einen Schiffsrumpf insbesondere für ein Container-Schiff, einen Bulkcarrier oder einen Tanker mit einer Erhöhung einer Außenkontur des Schiffsrumpfs. Diese Erhöhung ist im Bereich eines ersten und zweiten Spantenrisses in Bezug auf eine nach oben gerichtete Vertikalrichtung gegenüber einem an die Erhöhung unmittelbar angrenzenden Oberflächenabschnitt erhöht. Dies kann bedeuten, dass eine Vertikalposition der Erhöhung unterschiedlich ist zu einer Vertikalposition des angrenzenden Oberflächenabschnitts. Die Erhöhung ist in einem Bereich zwischen einer Mitte und einem Heck des Schiffsrumpfs angeordnet. Die Erhöhung befindet sich auf einer Unterseite des Schiffsrumpfs.

Die Außenkontur in dem ersten Spantenriss, der in einem bugseitigen Bereich der Erhöhung verläuft weist einen ersten Wendepunkt und einen zweiten Wendepunkt auf. Die Außenkontur in dem ersten Spantenriss erreicht in einem Bereich einer Mitte der Erhöhung einen maximalen Wert in Bezug auf die Vertikalrichtung. Die Außenkontur in dem zweiten Spantenriss befindet sich gegenüber dem ersten Spantenriss näher am Heck des Schiffsrumpfes beziehungsweise ist näher am Heck des Schiffsrumpfs angeordnet. Die Außenkontur weist in dem zweiten Spantenriss entlang einer Querrichtung des Schiffsrumpfes beiderseits der Erhöhung jeweils eine zweite Vertiefung mit einem neunten Wendepunkt und einem zehnten Wendepunkt auf. Dabei ist jede zweite Vertiefung Teil einer Haltevorrichtung für jeweils eine Schiffspropellerwelle zum Aufnehmen eines jeweiligen Schiffspropellers. Die Außenkontur in dem zweiten Spantenriss erreicht in einem Bereich der Mitte der Erhöhung einen weiteren maximalen Wert in Bezug auf die Vertikalrichtung.

Damit kann im zweiten Spantenriss ein weiterer maximaler Wert erreicht werden, der zum maximalen Wert des ersten Spantenrisses unterschiedlich ist. Die Außenkontur weist in einem Längsschnitt des Schiffsrumpfs entlang einer vorgegebenen Mittellinie der Erhöhung bugseitig im Bereich der Erhöhung einen siebten Wendepunkt auf und geht heckseitig über einen achten Wendepunkt aus der Erhöhung in einen heckseitigen Abschnitt des Schiffsrumpfs über. Am heckseitigen Ende der Erhöhung gleicht sich entlang des Längsschnitts in Richtung des Hecks eine vertikale Position der Erhöhung mit einer vertikalen Position des dazu angrenzenden Oberflächenabschnitts an.

Der Anspruch 2 kann damit unterschiedlich zum Anspruch 1 einen Schiffsrumpf beschreiben, der mehrere Haltevorrichtungen für mehrere Schiffspropeller aufweisen kann. In dieser Variante ist mittig im zweiten Spantenriss keine erste Vertiefung angeordnet. Die Haltevorrichtungen für die Schiffspropeller ergeben sich insbesondere durch die zweite Vertiefung beiderseits der Erhöhung. Daraus können sich genau zwei Haltevorrichtungen ergeben. Eine davon kann auf der linken Seite, die andere kann auf der rechten Seite der Erhöhung angeordnet sein.

In der Mitte ist keine Haltevorrichtung wie bei Anspruch 1 vorgesehen. Es können auch mehr als zwei Haltevorrichtungen, gebildet durch die jeweilige zweite Vertiefung, vorgesehen sein. Dadurch kann eine Antriebsleistung für ein Container-Schiff gesteigert werden. Häufig können zusätzliche Schiffspropeller beziehungsweise Schiffsschrauben mehr Antriebsleistung erzeugen als eine einzige baugleiche Schiffsschraube. Mit dem in Anspruch 2 beschrieben Schiffsrumpf kann ebenfalls eine verbesserte Anströmung der jeweiligen Schiffsschraube erzielt werden. Damit kann die Antriebsleistung nicht nur aufgrund zusätzlicher Schiffsschrauben gesteigert werden, sondern darüber hinaus kann eine zusätzliche Effizienzverbesserung des Schiffsantriebs aufgrund einer besseren Anströmung jeweiliger Schiffsschrauben erzielt werden. Die in den anderen Ausführungsformen und Beispielen genannten Vorteile gelten sinngemäß für den Anspruch 2. Eine Querausdehnung der Erhöhung senkrecht zu einer Längsrichtung des Schiffsrumpfs kann beispielsweise zwischen 50 % und 80 % der Breite des Schiffsrumpfs betragen. Insbesondere kann die Querausdehnung in diesem Fall 2/3 der Breite des Schiffsrumpfs betragen.

Eine weitere Ausführungsform dieser Erfindung sieht einen Schiffsrumpf vor, wobei eine Längsausdehnung der Erhöhung, eine Querausdehnung der Erhöhung und/oder eine Vertikalausdehnung der Erhöhung in Abhängigkeit von einer vorgegebenen Funktion mit einer Lastanforderung festgelegt sind. Die Längsausdehnung verläuft vorzugsweise entlang einer Längsachse des Schiffsrumpfs. Eine solche Längsachse verbindet vorzugsweise den Bug mit dem Heck des Schiffs. Die Querausdehnung kann senkrecht zur Längsausdehnung verlaufen und kann auch als eine horizontale Ausdehnung seitlich zur Längsausdehnung bezeichnet werden. Eine Vertikalausdehnung verläuft insbesondere von einer Unterseite des Unterwasserschiffs in Richtung zur Wasserlinie nach oben. Dies bedeutet, dass die genauen Abmessungen der Erhöhung, also eine Länge, Breite und Tiefe der Erhöhung von Nutzeranforderungen abhängig sein können.

Die Vertikalausdehnung der Erhöhung kann je nach Schiffstyp einige Zentimeter bis mehrere Meter betragen. Bei einem Container-Schiff kann diese Vertikalausdehnung beispielsweise etwa 1 m betragen. Beispielsweise kann die Vertikalausdehnung der Erhöhung in einen Wert zwischen 0,5 % bis 10 % der Breite des Schiffsrumpfs betragen. Der genaue Wert hängt dabei insbesondere von der Nutzeranforderung sowie dem konkreten Schiffsrumpf ab. Die Querausdehnung der Erhöhung kann insbesondere von einer räumlichen Ausdehnung des Schiffspropellers abhängig sein. Vor allem kann eine Nutzeranforderung die räumlichen Abmessungen der Erhöhung beeinflussen. Eine solche Nutzeranforderung kann beispielsweise eine Geschwindigkeit für ein Container-Schiff bei einer vorgegebenen Beladung sein. Ebenfalls kann ein geforderter Tiefgang für den Schiffsrumpf für einen Ladezustand des Schiffes vorgesehen sein. Dieser geforderte Tiefgang kann die Abmessungen der Erhöhung beeinflussen. In der Regel wird jedes Schiff individuell auf die Nutzeranforderung ausgelegt. Dies betrifft ebenfalls die konkrete Ausgestaltung der Erhöhung.

Ist beispielsweise ein Container-Schiff mit einer Ladekapazität von etwa 15000 Tonnagen gewünscht, welche zugleich eine Geschwindigkeit von etwa 25 Knoten erreichen soll, so werden die Abmessungen der Erhöhung in Abhängigkeit von dieser Funktion mit der dazugehörigen Lastanforderung ausgelegt. In diesem Fall ist die Funktion eine normale Vorwärtsfahrt des Container-Schiffs. Die Lastanforderung ist in diesem Fall eine Geschwindigkeit, welcher das Container-Schiff bei vorgegebenem Beladungszustand erreichen soll. Die Längsausdehnung der Erhöhung kann beispielsweise Werte zwischen 15 % und 50 % der Längsausdehnung des Schiffsrumpfs annehmen. Insbesondere kann die Längsausdehnung der Erhöhung 1/3 der Länge des Schiffsrumpfs betragen. Dabei kann die Erhöhung im hinteren Drittel des Schiffsrumpfs angeordnet sein. Die Erhöhung kann in ihrer Längsausdehnung 1/3 der Länge des Schiffrumpfs betragen und zugleich in einem Bereich des Mittschiffs beginnen und sich in Richtung des Hecks erstrecken. Dadurch kann eine besonders günstige Anströmung des Schiffspropellers realisiert werden.

Eine weitere Ausführungsform sieht vor, dass die Erhöhung zum Heck hin in Richtung einer vorgegebenen Wasserlinie ansteigt. Die vertikale Position der Erhöhung gleicht sich insbesondere in Richtung des Hecks entlang der Außenkontur des Längsschnitts der vertikalen Position des dazu angrenzenden Oberflächenabschnitts an. Die meisten Schiffsrümpfe steigen in Richtung des Hecks an. Dies gilt analog für die Erhöhung. Dies bedeutet insbesondere, dass es einen Bereich gibt, in dem die Erhöhung stärker ansteigt als der angrenzende Oberflächenabschnitt. Im heckseitigen Bereich des Schiffsrumpfs kann die Erhöhung weniger stark ansteigen als der angrenzende Oberflächenabschnitt, um mit dem angrenzenden Oberflächenabschnitt in eine gemeinsame heckseitige Fläche überzugehen. Dadurch ergibt sich vorzugsweise eine nach hinten offene Form des Schiffsrumpfs. Dies bewirkt zum Beispiel, dass eine in der Erhöhung geführte Wasserströmung effizient nach hinten abgeleitet werden kann. Turbulenzen in der Wasserströmung können reduziert werden, was sich vorteilhaft auf den Schiffsantrieb auswirken kann.

Eine weitere Ausführungsform dieser Erfindung sieht vor, dass die Erhöhung eine Grundfläche aufweist und ein Teil der Grundfläche, der dem Bugbereich zugewandt ist, als Ellipsensegment, Parabelsegment und/oder Kreissegment ausgebildet ist. Die Erhöhung ist insbesondere eine Fläche, welche im Raum nicht nur in einer Ebene liegt. Eine Projektion der Erhöhung entlang der Vertikalrichtung auf eine horizontale Fläche kann dabei eine zweidimensionale Fläche ergeben. Diese Fläche repräsentiert einen Teil der Erhöhung. Insbesondere stellt derjenige Flächenanteil mit dem maximalen Wert beziehungsweise dem maximalen Niveau die Grundfläche dar. Die Grundfläche kann eine senkrechte Projektion auf eine horizontale Fläche sein. Dies kann bedeuten, dass die Grundfläche zweidimensional sein kann. Insbesondere kann von der Grundfläche der Teil, der dem Bug zugewandt ist, als Kreissegment, Ellipsensegment und/oder Parabelsegment ausgeführt sein.

Der bugseitige Bereich, also derjenige Teil der Grundfläche, der dem Bugbereich zugewandt ist, kann bogenförmig ausgebildet sein. Diese Bogenform kann in Form eines Ellipsensegments, Parabelsegments und/oder Kreissegments auftreten. Vorzugsweise geht die Grundfläche aus dieser Bogenform in Richtung des Hecks in einen weiteren Flächenabschnitt der Grundfläche über, deren seitlichen Begrenzungslinien parallel verlaufen können. Dieser weitere Flächenabschnitt der Grundfläche kann als Trapez oder Rechteck beschrieben werden. Dabei ist jedoch zu beachten, dass die sich anschließende Form meistens nach hinten nicht abschließt, sondern offen ist. Aufgrund dieser bogenförmigen Grundfläche kann bugseitig ein sanfter Übergang von dem angrenzenden Oberflächenabschnitt zu der Erhöhung realisiert werden. Dies kann die hydrodynamischen Eigenschaften des Schiffsrumpfs weiter verbessern.

Eine weitere Ausführungsform sieht einen Schiffsrumpf vor, wobei zwei Begrenzungslinien der Grundfläche der Erhöhung zumindest in der heckseitigen Hälfte der Erhöhung in Längsrichtung zueinander stets einen gleichen Abstand aufweisen. Ist die Grundfläche in einem Abschnitt der Erhöhung zweidimensional, so sind die zwei Begrenzungslinien bevorzugt parallel zueinander. Dieser Abschnitt kann eine Form ähnlich wie ein Rechteck haben. Bei einer im Raum gekrümmten Grundfläche verlaufen die Begrenzungslinien bevorzugt so, dass der dazwischenliegende Abstand gleich bleibt. Damit kann sich die Erhöhung zum Heck hin mit derselben Breite fortsetzen. Diese Breite kann auf den Schiffspropeller zugeschnitten sein, der damit verbessert angeströmt werden kann.

Die zwei Begrenzungslinien können in einer anderen Ausführungsform zum Heck hin etwas auseinanderdriften, also der Abstand zwischen diesen Begrenzungslinien kann sich erhöhen. Dabei kann eine mögliche Vergrößerung des Abstands weniger als 5 % des kleinsten Abstands in der heckseitigen Hälfte der Erhöhung betragen. Damit kann eine verbesserte Anströmung unterschiedlicher Schiffspropeller realisiert werden und die Strömungswirkung der Erhöhung zusätzlich variiert werden.

Eine weitere Ausführungsform dieser Erfindung sieht vor, dass die Erhöhung eine an den Oberflächenabschnitt unmittelbar angrenzende Zwischenfläche aufweist und eine Projektion der Zwischenfläche senkrecht zur Vertikalrichtung und/oder parallel zu einer Querrichtung auf eine vertikale Fläche sich heckseitig derart verjüngt, sodass in Längsrichtung des Schiffsrumpfs zum Heck die Erhöhung und der angrenzende Oberflächenabschnitt ineinander in eine gemeinsame heckseitige Fläche des Schiffsrumpfs übergehen. Die Zwischenfläche befindet sich vorzugsweise zwischen dem angrenzenden Oberflächenabschnitt und der Grundfläche. Mithilfe der Zwischenfläche können die unterschiedlichen vertikalen Positionen der Grundfläche sowie des Oberflächenabschnitts überbrückt werden. Die Zwischenfläche beinhaltet insbesondere den ersten, zweiten sowie dritten und vierten Wendepunkt. Projiziert man die Zwischenfläche senkrecht zur Vertikalrichtung und/oder parallel zu der Querrichtung auf eine vertikale Fläche, so ergibt sich wiederum eine zweidimensionale Fläche. Die so gebildete Fläche kann als "projizierte Zwischenfläche" bezeichnet werden.

Diese Zwischenfläche kann sich größtenteils entlang des Längsschnitts der Erhöhung erstrecken. Lediglich an dem bugseitigen Ende der Erhöhung kann die die Zwischenfläche eine bogenförmige Form annehmen. Ansonsten verläuft die Zwischenfläche vorzugsweise parallel zu der Mittellinie des Schiffsrumpfs. In einem Mittelbereich der Erhöhung ergibt die Projektion der Zwischenfläche vorzugsweise zwei parallele Linien. Diese beiden parallelen Linien können sich am heckseitigen Ende der Erhöhung allmählich verjüngen. Anders ausgedrückt laufen diese beiden die Zwischenfläche begrenzenden Linien bevorzugt heckseitig zusammen. Daraus ergibt sich insbesondere, dass die vertikale Position der Grundfläche sich mit der vertikalen Position der angrenzenden Oberflächenabschnitts angleichen. Diese beiden vertikalen Positionen beziehungsweise diese beiden Flächen können ineinander in die gemeinsame heckseitige Fläche des Schiffsrumpfs übergehen. Die Erhöhung "verschwindet" demnach in Richtung des Hecks, ohne dabei abrupt zu enden. Da dadurch keine abrupten Änderungen an der Außenkontur des Schiffsrumpfs erzeugt werden, kann eine Wasserströmung im Bereich der Erhöhung effektiv mit weniger Strömungsabriss auf den Schiffspropeller gelenkt werden.

Eine weitere Ausführungsform sieht einen Schiffsrumpf vor, wobei die Grundfläche und/oder die Zwischenfläche eine Wölbung in Richtung der vorgegebenen Wasserlinie aufweisen. Dies bedeutet insbesondere, dass sich die Erhöhung in Richtung der Wasserlinie erstreckt. Im Bereich der ersten Vertiefung kann diese Wölbung in die entgegengesetzte Richtung zeigen. Die Wölbung in Richtung der vorgegebenen Wasserlinie kann nur die Zwischenfläche betreffen. Dies bedeutet, dass die dazugehörigen Wendepunkte mathematisch klarer definiert sind. So ist beispielsweise eine dritte Ableitung des Verlaufs der Außenkontur hinsichtlich seines Vorzeichens im Wendepunkt festgelegt. Korrespondierende Wendepunkte wie zum Beispiel der dritte und vierte Wendepunkt weisen betreffend die dritte Ableitung der Außenkontur im Wendepunkt ein unterschiedliches Vorzeichen auf. Damit kann der angrenzende Oberflächenabschnitt über die Zwischenfläche in die Grundfläche überführt werden. Im Bereich der Wölbung ist der Verlauf der dazugehörigen Außenkontur dabei vorzugsweise stetig differenzierbar. Differenzierbar bedeutet in diesem Zusammenhang, dass der Verlauf der Außenkontur stets über den so genannten Differenzenquotienten definiert ist. An jeden Punkt der Außenkontur, zu mindestens im Bereich der Erhöhung, ist somit der Differenzenquotient berechenbar.

Damit kann eine anliegende Wasserströmung effektiv in Richtung der Schiffsschraube beziehungsweise des Schiffspropellers gelenkt werden.

Eine weitere Ausführungsform sieht vor, dass die Außenkontur in dem ersten Spantenriss im bugseitigen Bereich der Erhöhung entlang einer vorgegebenen Querrichtung des Schiffsrumpfs von dem angrenzenden Oberflächenabschnitt in die gewölbte Zwischenfläche mit dem ersten Wendepunkt übergeht, die Außenkontur im Anschluss in die Grundfläche übergeht, die Außenkontur nach der Grundfläche wieder in die gewölbte Zwischenfläche mit dem zweiten Wendepunkt übergeht, wobei eine dritte mathematische Ableitung eines Verlauf der Außenkontur des ersten Spantenrisses im ersten Wendepunkt ein unterschiedliches Vorzeichen zum zweiten Wendepunkt hat und die Außenkontur keine weiteren Wendepunkte aufweist. Dies betrifft vorzugsweise die Außenkontur auf der Unterseite des Unterwasserschiffs. Der sich daraus ergebende Verlauf der Außenkontur ist vorzugsweise symmetrisch bezüglich der Mittellinie des Schiffsrumpfs. Bevorzugt ist die Außenkontur eines jeden Spantenrisses im Bereich der Erhöhung symmetrisch zur Mittellinie. Damit kann ein harmonisches Strömungsprofil realisiert werden, was sich günstig auf den Schiffsantrieb auswirkt.

Eine weitere Ausführungsform sieht einen Schiffsrumpf mit dem Schiffspropeller vor, wobei die Querausdehnung der Erhöhung senkrecht zur Längsrichtung des Schiffsrumpfes in Abhängigkeit von einer Breite des Schiffspropellers festgelegt ist, wobei insbesondere die Querausdehnung der Erhöhung maximal ein Drittel einer Breite des Schiffsrumpfes beträgt. Um die Erhöhung optimal für einem Schiffsantrieb zu nutzen, ist es sehr sinnvoll, die Breite der Erhöhung mit den Abmessungen des Schiffspropellers abzustimmen. Die Querausdehnung der Erhöhung verläuft dabei in der Regel senkrecht zu der vorgegebenen Mittellinie. Entlang der Querausdehnung kann man von einer linksseitigen Zwischenfläche zu einer rechtsseitigen Zwischenfläche der Erhöhung gelangen. Diese Querausdehnung kann im bugseitigen Bereich der Erhöhung geringer sein, da dort die Erhöhung eine Bogenform annehmen kann. Im heckseitigen Bereich der Erhöhung kann diese ihre maximale Querausdehnung erreichen. Diese maximale Querausdehnung der Erhöhung kann dabei in Abhängigkeit von einer Breite des Schiffspropellers festgelegt werden.

Die Querausdehnung der Erhöhung kann etwas breiter als eine Breite des dafür vorgesehenen Schiffspropellers sein. Beispielsweise kann die Querausdehnung der Erhöhung um 20 % breiter als der dazugehörige Schiffspropeller sein. Jedoch sieht diese Ausführungsform insbesondere vor, dass die Querausdehnung maximal ein Drittel der Breite des Schiffsrumpfs beträgt. Dies bedeutet beispielsweise, dass im ersten Spantenriss der erste Wendepunkt vom zweiten Wendepunkt einen Abstand aufweist, der ein Drittel der Breite des Schiffsrumpfs beträgt. Bei einem Schiffsrumpf mit 60 m Breite würde dieser Abstand demzufolge 20 m betragen, bei einem 32 m breiten Schiffsrumpf betrüge der Abstand etwa 10 bis 11 m. Bezüglich des dritten und vierten Wendepunkts können die vorgenannten Ausführungen sinngemäß übertragen werden. Aufgrund der möglichen Bogenform der Zwischenfläche kann der Abstand vom ersten Wendepunkt zum zweiten Wendepunkt geringer sein als der Abstand vom dritten Wendepunkt zum vierten Wendepunkt.

Der Abstand des ersten Wendepunkts zum zweiten Wendepunkt kann jedoch geringer ausfallen. Dies hängt vor allem davon ab, wo der erste Spantenriss verläuft. Im dem Bug zugewandten Bereich kann die Erhöhung bogenförmig ausgeführt sein. Demzufolge nähern sich der erste und zweite Wendepunkt an, wenn der erste Spantenriss in Richtung des Bugs verschoben wird. Aufgrund von diesem Verlauf der Erhöhung kann die anliegende Strömung optimal genutzt werden und zugleich wird eine Schiffsstabilität des Schiffsrumpfs dabei nicht in Mitleidenschaft gezogen.

Eine Länge der Erhöhung kann vom bugseitigen Ende der Erhöhung bis zum Heck des Schiffsrumpfs definiert sein. In diesem Fall kann zum Beispiel der erste Spantenriss vom bugseitigen Ende der Erhöhung 1 % bis 20 % der Länge der Erhöhung entfernt sein. Bezüglich des zweiten Spantenrisses kann die Entfernung 25 % bis 80 % der Längsausdehnung der Erhöhung betragen.

Eine weitere Ausführungsform sieht einen Schiffsrumpf vor, wobei die Querausdehnung der Erhöhung einen Wert zwischen 80 % bis 150 % der Breite des Schiffspropellers annimmt, insbesondere um 15 % bis 25 %, bevorzugt um 20 % größer ist als die Breite des Schiffspropellers. Beträgt die Querausdehnung 120 % der Breite des Schiffspropellers, so kann die anliegende Wasserströmung optimal zum Antreiben des Container-Schiffs genutzt werden. Dies bedeutet, dass die Querausdehnung, insbesondere die maximale Querausdehnung, der Erhöhung das 1,2-fache der Breite des Schiffspropellers betragen kann. Anstelle des Begriffs "Schiffspropeller" kommt häufig auf noch das Wort "Schiffsschraube" vor. Im Rahmen dieser Anmeldung bedeuten diese beiden Begriffe das gleiche. Bei einem Container-Schiff von 400 m Länge kann beispielsweise ein Schiffspropeller mit einem Durchmesser von etwa 10 m vorgesehen sein, bei einem Container-Schiff von 200 m Länge kann der Durchmesser etwa 8 m betragen. Die Querausdehnung der Erhöhung würde in diesem Beispiel bei dem 400 m Container-Schiff 12 m betragen, bei dem 200 m Container-Schiff wäre der Wert demzufolge 9,6 m.

Bei der Entwicklung des Schiffsrumpfs, wie er in dieser Anmeldung vorgestellt wird, hat sich gezeigt, dass eine Erhöhung, die um 20 Prozent breiter ist als der dazugehörige Schiffspropeller, eine sehr gute Effizienzsteigerung hinsichtlich des Antriebs des Schiffes erzeugen kann. Bei kleineren Schiffen kann jedoch eine geringere Querausdehnung sinnvoll sein. So kann eine verbesserte Anströmung auf den Schiffspropeller sowie die damit verbundene Effizienzsteigerung beim Schiffsantrieb bei 80 % und ebenfalls bei 150 % der Breite des Schiffsrumpfs zu beobachtet werden. Sinnvollerweise wird die Querausdehnung erst dann konkretisiert, wenn der Schiffstyp sowie die dazugehörigen Anforderungen bekannt sind.

Eine weitere Ausführungsform sieht einen Schiffsrumpf vor, wobei die Außenkontur in dem ersten Spantenriss und/oder die Außenkontur in dem zweiten Spantenriss entlang einer Querrichtung des Schiffsrumpfes beiderseits der Erhöhung jeweils eine zweite Vertiefung mit einem neunten Wendepunkt und einem zehnten Wendepunkt aufweist. Dies bedeutet insbesondere, dass die Zwischenfläche nicht direkt in den angrenzenden Oberflächenabschnitt übergeht, sondern dazwischen die zweite Vertiefung befindlich ist. Die zweite Vertiefung zeigt sich im Spantenriss als zwei Teilbereiche, welche seitlich von der ersten Vertiefung angeordnet sein können. Der Verlauf der Außenkontur des zweiten Spantenrisses kann im Falle der zweiten Vertiefung zwei zusätzliche Wendepunkte aufweisen. Es kann vorgesehen sein, dass die Außenkontur im Bereich der zweiten Vertiefung genau zwei Wendepunkte aufweist. Die erste Vertiefung befindet sich dabei vorzugsweise mittig in der Erhöhung und kann ein globales Minimum betreffend die Außenkontur des zweiten Spantenrisses erreichen. Neben diesem globalen Minimum kann die Außenkontur zwei weitere lokale Minima im Bereich der zweiten Vertiefung aufweisen. Da die Außenkontur vorzugsweise bezüglich einer Symmetrieachse spiegelbildlich ist, kann die Außenkontur des zweiten Spantenrisses zwei Teilbereiche der zweiten Vertiefung aufweisen. Der erste Teilbereich der zweiten Vertiefung ist demnach links von der ersten Vertiefung angeordnet, der zweite Teilbereich der zweiten Vertiefung ist rechts von der ersten Vertiefung angeordnet.

Ausgehend von dem Bereich der Erhöhung verläuft eine Vertikalposition der Außenkontur im Falle der zweiten Vertiefung zur Seite hin über den dritten Wendepunkt in der Regel nicht direkt zu dem angrenzenden Oberflächenabschnitt. Die Vertikalposition der Außenkontur kann zunächst abnehmen, in die zweite Vertiefung münden und nach dem dortigen minimalen Wert wieder in Richtung des angrenzenden Oberflächenabschnitts ansteigen. Die Außenkontur kann somit über den dritten Wendepunkt zunächst in die zweite Vertiefung übergehen. Diese zweite Vertiefung kann ein lokales Minimum beziehungsweise einen minimalen Wert aufweisen. Über den neunten Wendepunkt kann die Außenkontur in den angrenzenden Oberflächenabschnitt übergehen.

Anschaulich gesprochen bedeutet dies, dass die Erhöhung seitlich durch zwei weitere Vertiefungen gegenüber dem angrenzenden Oberflächenabschnitt abgegrenzt sein kann. Die zweite Vertiefung kann sich allerdings in Richtung des Hecks in einem Längsschnitt des Schiffsrumpfs reduzieren. Dies bedeutet insbesondere, dass die zweite Vertiefung entlang der vorgegebenen Mittellinie, welche meist parallel zu der Längsrichtung des Schiffsrumpfs verläuft, nicht konstant bezüglich ihrer Tiefe ausgebildet ist. Die zweite Vertiefung kann heckseitig abnehmen, sodass die Erhöhung, die zweite Vertiefung, sowie der angrenzende Oberflächenabschnitt in eine gemeinsame heckseitige Fläche übergehen. Durch diese beiden zusätzlichen Vertiefungen kann die Wasserströmung effizient im Bereich der Erhöhung geführt werden. Die so geführte Wasserströmung kann im Bereich des heckseitigen Endes der Erhöhung auf den Schiffspropeller treffen und diesen so effizienter in Bewegung setzen. Dadurch kann ein Teil der Wasserströmung für den Schiffsantrieb verwendet werden. Im Idealfall kann sich ein Kraftstoffersparnis von mehr als 10 Prozent gegenüber einem Schiffsrumpf ohne die Erhöhung ergeben.

Eine weitere Ausführungsform sieht einen Schiffsrumpf vor, wobei sich am heckseitigen Ende der Erhöhung entlang des Längsschnitts in Richtung des Hecks eine vertikale Position der heckseitigen Fläche mit der vertikalen Position der Erhöhung angleicht. Insbesondere kann sich eine vertikale Position der zweiten Vertiefung mit der vertikalen Position der Erhöhung beziehungsweise der heckseitigen Fläche in Richtung des Hecks angleichen. Dies bedeutet, dass der Schiffsrumpf in Richtung des Hecks allmählich in eine einzige heckseitige Fläche übergehen kann. Ab einem gewissen Punkt in Richtung des Hecks kann die Oberfläche des Schiffsrumpfs nicht länger in unterschiedliche Teilflächen differenziert werden. Die heckseitige Fläche kann eine gekrümmte Fläche sein, welche nach oben in Richtung der Wasserlinie ansteigt. Dadurch kann die nach hinten offene Form des Schiffsrumpfs geschaffen werden. Dies ermöglicht ein hydrodynamisches effizientes "Abfließen" der Wasserströmung, was sich günstig auf den Schiffsantrieb auswirkt.

Weitere Merkmale der Erfindung ergeben sich aus den Ansprüchen, den Figuren und der Figurenbeschreibung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen verwendbar, ohne den Rahmen der Erfindung zu verlassen. Es sind somit auch Ausführungen von der Erfindung als umfasst und offenbart anzusehen, die in den Figuren nicht explizit gezeigt und erläutert sind, jedoch durch separierte Merkmalskombinationen aus den erläuterten Ausführungen hervorgehen und erzeugbar sind. Es sind auch Ausführungen und Merkmalskombinationen als offenbart anzusehen, die somit nicht alle Merkmale eines ursprünglich formulierten unabhängigen Anspruchs aufweisen. Es sind darüber hinaus Ausführungen und Merkmalskombinationen, insbesondere durch die oben dargelegten Ausführungen, als offenbart anzusehen, die über die in den Rückbezügen der Ansprüche dargelegten Merkmalskombinationen hinausgehen oder von diesen abweichen.

Die vorliegende Erfindung wird nun anhand der beigefügten Zeichnungen näher erläutert. Dabei ist zu beachten, dass die Zeichnungen nicht maßstabsgetreu sind. Alle Zeichnungen sind schematisch und sollen helfen, das zu Grunde liegende Prinzip dieser Erfindung besser zu verstehen. Insbesondere sollen die Zeichnungen das Verständnis der Patentansprüche erleichtern. Anhand der Zeichnungen soll verdeutlich werden, welche Formgebung der Schiffsrumpf, insbesondere die Erhöhung, aufweist und welche Aspekte diesen Schiffsrumpf von gewöhnlichen Schiffsrümpfen unterscheiden. Aus den Figuren sowie aus der Figurenbeschreibung können keine einschränkenden Merkmale oder gar konkrete Abmessungen für den Schiffsrumpf oder die Erhöhung abgeleitet werden. Dabei zeigt:
- Fig. 1:: eine schematische dreidimensionale Darstellung eines Schiffsrumpfs mit einer Erhöhung;
- Fig. 2:: eine schematische Darstellung eines ersten Spantenrisses des Schiffsrumpfs mit der Erhöhung;
- Fig. 3:: eine schematische Darstellung eines zweiten Spantenrisses mit der mittigen Erhöhung, welche eine erste Vertiefung beinhaltet;
- Fig. 4:: ein schematischer Längsschnitt entlang einer vorgegebenen Mittellinie des Schiffsrumpfs, wobei die Mittellinie die Haltevorrichtung schneidet;
- Fig. 5:: eine weitere schematische Darstellung des zweiten Spantenrisses mit der ersten Vertiefung und einer zweiten Vertiefung, die zwei Teilbereiche aufweist;
- Fig. 6:: ein beispielhafter Längsschnitt entlang der Mittellinie, wobei in diesem Längsschnitt schematisch die erste Vertiefung dargestellt ist;
- Fig. 7:: eine schematische Ansicht auf einen Teil des Schiffsrumpfs mit der Erhöhung;
- Fig. 8:: ein schematisches Strömungsprofil in vertikaler Blickrichtung auf den Schiffsrumpf; und
- Fig. 9: eine schematische Darstellung des Schiffsrumpf in einem Längsschnitt mit der zweiten Vertiefung als Haltevorrichtung für den Schiffspropeller.

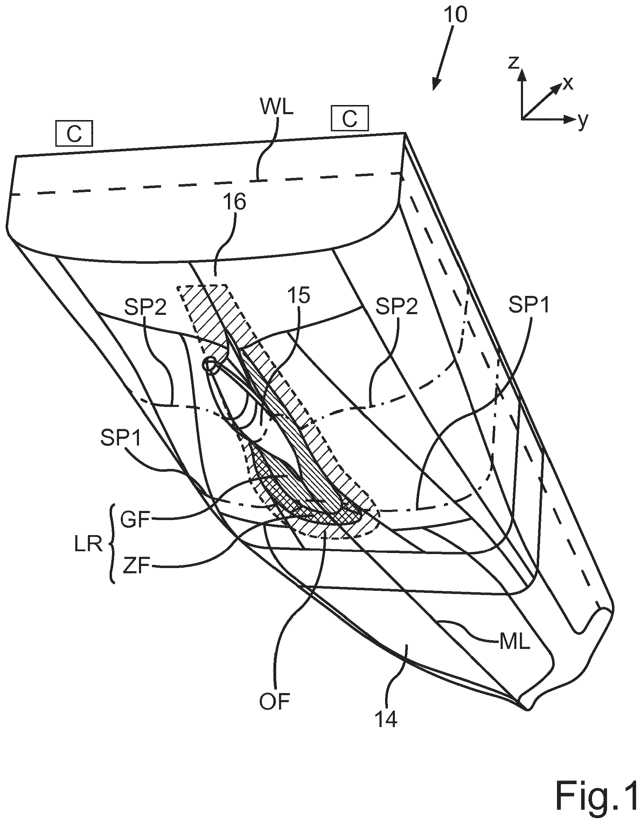

Fig. 1 zeigt beispielhaft und schematisch einen Schiffsrumpf 10 mit einer Erhöhung LR im Bereich einer Unterseite des Schiffsrumpfs 10. Diese Unterseite des Schiffsrumpfs 10 ist dabei in einem Bereich eines Unterwasserschiffs US angeordnet. Die Erhöhung LR befindet sich vorzugsweise in einem Bereich, der von einem Mittschiffs MS bis zu einem Heck 16 des Schiffsrumpfs 10 verläuft. Die Erhöhung LR lässt sich in unterschiedliche Flächen aufteilen. Der um eine Haltevorrichtung 15 gestrichelte Bereich der Erhöhung LR stellt eine Grundfläche GF dar. Ein sich zur Seite weiterer anschließender gestrichelter Bereich der Erhöhung LR stellt eine Zwischenfläche ZF dar. Um die Zwischenfläche ZF herum ist ein angrenzender Oberflächenabschnitt OF angeordnet. Die Erhöhung folgt dabei in Längsrichtung prinzipiell der Form des Schiffsrumpfs 10.

Mittig ragt aus der Erhöhung LR eine erste Vertiefung V1 heraus. Diese erste Vertiefung V1 ist Teil der Haltevorrichtung 15 für einen Schiffspropeller 12. Der Schiffsrumpf 10 in Fig. 1 zeigt beispielhaft eine Mittellinie ML, welche den Schiffsrumpf 10 symmetrisch teilt. Auch die Form der Erhöhung LR ist vorzugsweise symmetrisch ausgebildet. Die Haltevorrichtung 15 im Bereich der ersten Vertiefung V1 kann eine Schiffspropellerwelle beinhalten, welche den Schiffspropeller 12 aufnimmt. Die Schiffspropellerwelle ist vorzugsweise mit einem Schiffsmotor verbunden. Die Fig. 1 zeigt ebenfalls ein Koordinatensystem mit einer z-Achse, einer x-Achse sowie einer y-Achse. Anstelle z-Achse kann auch von z-Richtung gesprochen werden. Für die anderen Achsen gilt dies analog. Die z-Achse stellt die Vertikalrichtung dar, die x-Achse repräsentiert die Längsrichtung des Schiffsrumpfs 10 und die y-Achse repräsentiert eine Querrichtung des Schiffsrumpfs 10.

Schematisch zeigt die Fig. 1 ebenfalls zwei Container C, welche sich auf einer Oberfläche des Schiffsrumpfs 10 befinden. Dies soll die Orientierung erleichtern. Die Fig. 1 zeigt ebenfalls eine Wasserlinie WL, welche den Schiffsrumpf 10 in ein Unterwasserschiff US sowie einen darüber liegenden Teil des Schiffrumpfs 10 aufteilt. In Fig. 1 sind beispielhaft zwei Außenkonturen AK zu unterschiedlichen Spantenrissen angedeutet. Ein erster Spantenriss SP1 verläuft dabei durch einen bugseitigen Teil der Erhöhung LR. Ein zweiter Spantenriss SP2 verläuft durch einen Bereich der Erhöhung LR, in dem die Haltevorrichtung 15 bereits deutlich erkennbar ist. Der zweite Spantenriss SP2 ist demnach näher an dem Heck 16 des Schiffsrumpfs 10 als der erste Spantenriss SP1 angeordnet.

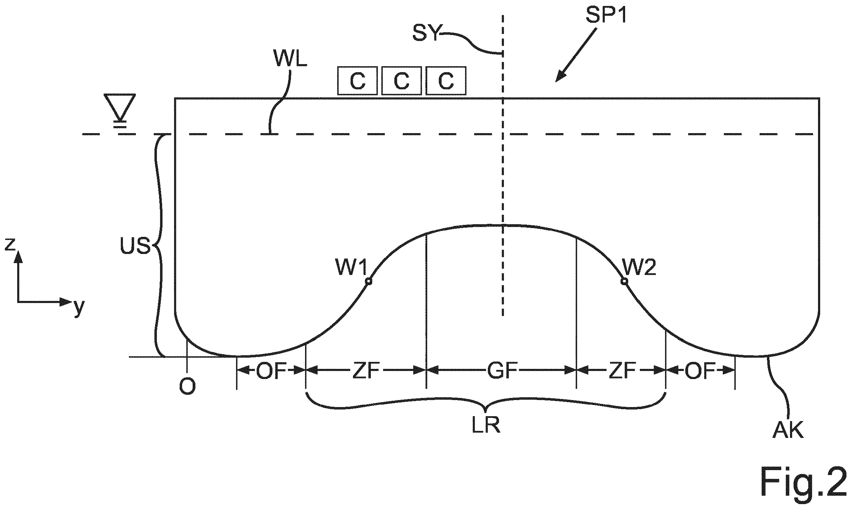

Fig. 2 zeigt beispielhaft den ersten Spantenriss SP1. Bei den Spantenrissen ist stets dabei die dazugehörige Außenkontur AK von besonderer Bedeutung. Der Verlauf der Außenkontur AK kann die Formgebung des Schiffsrumpfs 10 beeinflussen. Die Wasserlinie WL teilt den Schiffsrumpf 10 in das Unterwasserschiff US sowie einen Anteil auf, der darüber liegt. Die Fig. 2 zeigt beispielhaft drei Container C, die sich auf einer Oberfläche des Schiffsrumpfs 10 befinden. Der Verlauf der Außenkontur AK wird im Folgenden gemäß Fig. 2 von links nach rechts ausgehend von einem Startpunkt O beschrieben. Die Beschreibung dieses Verlaufs der Außenkontur AK soll dabei das Verständnis der Patentansprüche erleichtern.

Links von dem Startpunkt O verläuft die Außenkontur AK in Richtung positiver y-Richtung vertikal nach unten, wendet sich nach rechts in Richtung des angrenzenden Oberflächenabschnitts OF und erreicht den Startpunkt O. Bis zu diesem Punkt entspricht der Verlauf der Außenkontur AK in der Regel dem eines gewöhnlichen Schiffsrumpfs 10. Im Bereich des angrenzenden Oberflächenabschnitts OF erreicht die vertikale Ausdehnung der Außenkontur AK ein Minimum. Im weiteren Verlauf der Außenkontur AK in positiver y-Richtung steigt die Außenkontur über einen ersten Wendepunkt W1 zunächst an. Der erste Wendepunkt W1 ist im Beispiel von Fig. 1 im Bereich der Zwischenfläche ZF angeordnet. Das heißt die Außenkontur AK steigt bezüglich des Koordinatensystems von Fig. 2 zunächst vertikal in z-Richtung an und erreicht im ersten Wendepunkt W1 eine erste maximale Steigung.

Im weiteren Verlauf der Außenkontur AK in Richtung zu einem zweiten Wendepunkt W2 nimmt die Steigung der Außenkontur AK zunächst wieder ab und erreicht im Bereich der Grundfläche GF vorzugsweise eine Steigung von 0. Dies bedeutet, dass die Grundfläche GF horizontal ausgebildet sein kann. Der weitere Verlauf dieser Außenkontur AK kann mit Hilfe einer Symmetrieachse SY sehr einfach dargestellt werden. Vorzugsweise ist der gesamte Schiffsrumpf 10 sowie die dazu gehörige Erhöhung LR zu dieser Symmetrieachse SY symmetrisch. Dies bedeutet, dass eine Spiegelung der Außenkontur AK an der Symmetrieachse SY den weiteren Verlauf der Außenkontur rechts von der Symmetrieachse SY erklären kann.

Rechts von der Symmetrieachse SY verläuft die Außenkontur AK zunächst horizontal und fällt dann im Bereich der Zwischenfläche ZF über den zweiten Wendepunkt W2 ab. Die Außenkontur AK erreicht über den zweiten Wendepunkt W2 den sich daran anschließenden angrenzenden Oberflächenabschnitt OF. Die in der Fig. 2 dargestellte Erhöhung LR im ersten Spantenriss SP1 kann als wannenförmig, topfformähnlich oder U-Form-ähnlich bezeichnet werden. Die Erhöhung LR erstreckt sich dabei von der Zwischenfläche ZF mit dem ersten Wendepunkt W1 bis zu Zwischenfläche ZF mit dem zweiten Wendepunkt W2. Der Verlauf der Außenkontur AK weist vorzugsweise an keiner Stelle im Bereich des Unterwasserschiffs US Knickstellen oder Sprünge auf. Dies bedeutet, dass die Außenkontur AK meistens differenzierbar ist.

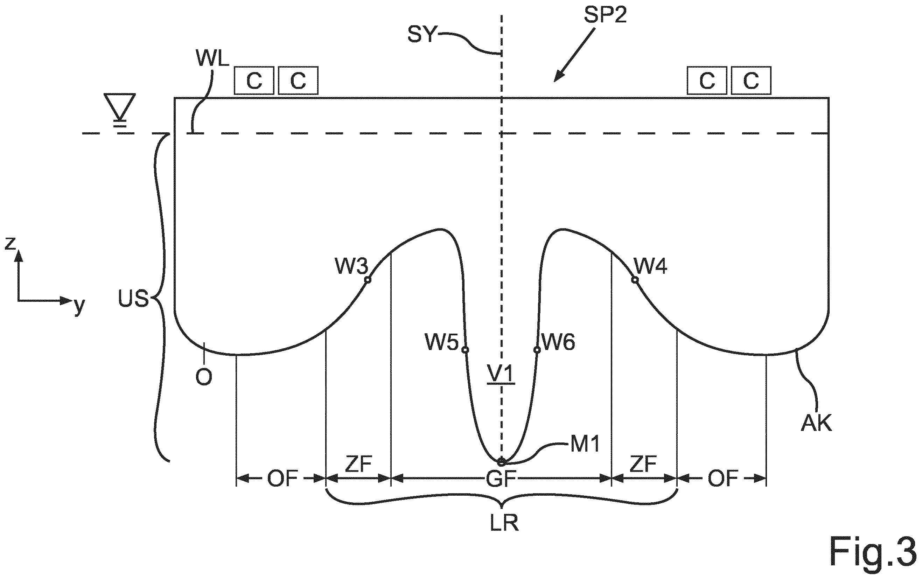

In Fig. 3 ist der zweite Spantenriss SP2 gezeigt. Dieser zweite Spantenriss SP2 ist näher an dem Heck 16 des Schiffsrumpfs 10 angeordnet als der erste Spantenriss SP1. Der erste Spantenriss SP1 verläuft vorzugsweise durch ein bogenförmiges Segment der Erhöhung LR. Dieses bogenförmige Segment ist in Fig. 1 bugseitig gut zu erkennen. Der Verlauf der Außenkontur AK des zweiten Spantenrisses SP2 verläuft zunächst ähnlich wie in Fig. 2. Zunächst verläuft die Außenkontur AK beginnend von einem Startpunkt O horizontal entlang einer Querrichtung, die parallel zur y-Achse ist. Die Außenkontur AK steigt im weiteren Verlauf entlang der y-Achse in positiver z-Richtung an und erreicht einen dritten Wendepunkt W3. In diesem dritten Wendepunkt W3 erreicht die Steigung der Außenkontur AK ein lokales Maximum. Im weiteren Verlauf der Außenkontur in positiver y-Richtung nimmt die Steigung der Außenkontur AK wieder ab, erreicht das maximale Niveau der Erhöhung LR und erreicht in einem fünften Wendepunkt W5 ein lokales Minimum. Der fünfte Wendepunkt W5 ist dabei im Bereich einer ersten Vertiefung V1 angeordnet.

Die erste Vertiefung V1 ist Teil der Haltevorrichtung 15 für den Schiffspropeller 12. Aus Gründen der Übersichtlichkeit ist der Schiffspropeller 12 in Fig. 3 nicht dargestellt. Die erste Vertiefung V1 beziehungsweise die dazu gehörige Außenkontur AK erreicht nach dem fünften Wendepunkt W5 in positiver y-Richtung ein lokales Minimum. Dieses zur der ersten Vertiefung V1 gehörende Minimum ist in Fig. 3 mit M1 gekennzeichnet. Dieses lokale Minimum M1 kann wie in Fig. 3 dargestellt ist, auch ein globales Minimum der Außenkontur des zweiten Spantenrisses SP2 sein. Nach diesem Minimum M1 steigt die Außenkontur AK in y-Richtung des zweiten Spantenrisses SP2 an und erreicht einen sechsten Wendepunkt W6. In diesem sechsten Wendepunkt W6 erreicht die Steigung der Außenkontur AK ein weiteres lokales Maximum. Im Anschluss an den sechsten Wendepunkt W6 nimmt die Steigung der Außenkontur AK wieder ab und mündet in das maximale Niveau der Erhöhung LR. Der Betrag der Steigung im dritten Wendepunkt W3 kann sich vom Betrag der Steigung im sechsten Wendepunkt W6 unterscheiden.

Im weiteren Verlauf in y-Richtung fällt die Außenkontur AK aus der Horizontalen ab und erreicht den vierten Wendepunkt W4. Die Steigung der Außenkontur AK im vierten Wendepunkt W4 ist bevorzugt betragsmäßig dieselbe wie im dritten Wendepunkt W3. Jedoch ist das Vorzeichen der beiden Steigungen dabei gegensätzlich. Dies bedeutet, dass im dritten Wendepunkt W3 die Außenkontur eine positive Steigung hat und im vierten Wendepunkt W4 eine betragsmäßig gleiche, jedoch negative Steigung hat. Vorzugsweise ist der zweite Spantenriss SP2 des Schiffsrumpfs 10 auch bezüglich der Symmetrieachse SY symmetrisch. In Fig. 2 sowie Fig. 3 zeigt ein auf den Kopf gestelltes Dreieck die Wasserlinie WL an.

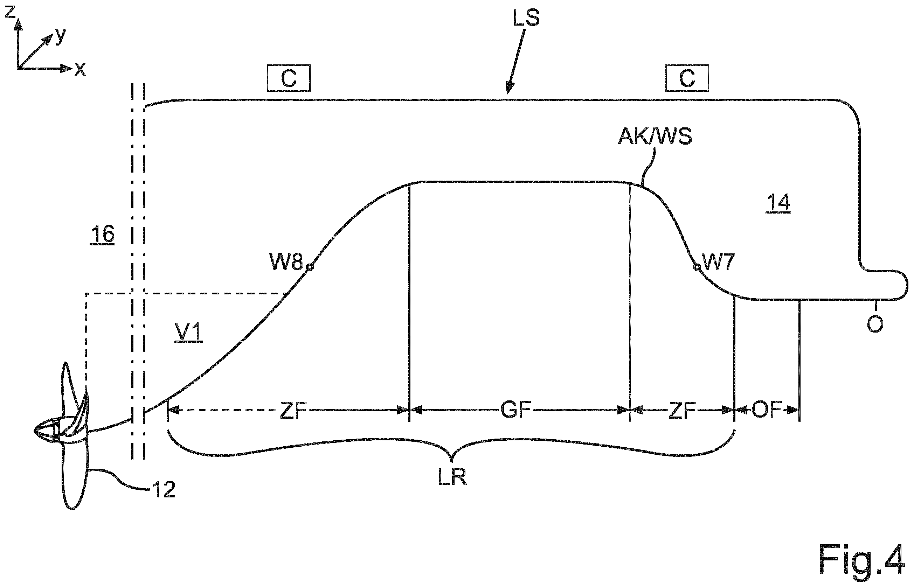

In Fig. 4 ist beispielhaft ein Längsschnitt LS gezeigt. Dieser Längsschnitt LS ergibt sich dabei, indem der Schiffsrumpf 10 entlang der Außenkontur AK, die im Fall von Fig. zu einem Wellenschnitt WS gehört geschnitten wird. Im Beispiel von Fig. 4 ist auf der rechten Seite der Bug 14 angeordnet und auf der linken Seite ist der Bereich des Hecks 16 zu finden. Im Bereich des Bugs 14 ist am Ende des Schiffsrumpfs 10 eine abstehende Nase angedeutet. Im Bereich dieser abstehenden Nase ist der Startpunkt O eingetragen. Der Verlauf der Außenkontur AK wird in Fig. 4 ausgehend vom Startpunkt O in Richtung des Hecks 16, also in negativer x-Richtung, beschrieben.

Zunächst verläuft die Außenkontur AK ausgehend vom Startpunkt O horizontal und erreicht den angrenzenden Oberflächenabschnitt OF, der vor der Erhöhung LR angeordnet ist. Im weiteren Verlauf der Außenkontur AK in Richtung des Hecks 16 steigt die Außenkontur AK zunächst an und erreicht einen siebten Wendepunkt W7. In diesem siebten Wendepunkt W7 erreicht die Steigung der Außenkontur AK ein lokales Maximum. Im weiteren Verlauf der Außenkontur AK in Richtung des Hecks 16 nimmt die Steigung der Außenkontur AK ab und erreicht die Grundfläche GF. Die Außenkontur AK erreicht im Bereich der Grundfläche GF vorzugsweise ein maximales Niveau. In diesem Bereich ist die Vertikalposition der Erhöhung in der Regel maximal. Am heckseitigen Ende der Grundfläche GF verlässt die Außenkontur AK dieses maximale Niveau und geht in die Zwischenfläche ZF über.

Die Außenkontur AK erreicht über den achten Wendepunkt W8 den Bereich der ersten Vertiefung V1. Am heckseitigen Ende der Außenkontur AK ist der Schiffspropeller 12 angedeutet. Der Schiffspropeller 12 ist vorzugsweise über eine Schiffspropellerwelle mit einem Schiffsmotor verbunden. In der Regel ist die vertikale Position des Schiffspropellers 12 niedriger als die vertikale Position des Oberflächenabschnitts OF, der bugseitig an die Zwischenfläche ZF mit dem siebten Wendepunkt W7 angrenzt. Die Erhöhung ist vorzugsweise in einem Bereich angeordnet, der sich zwischen einem Mittschiffs des Schiffsrumpfs 10 und dem Heck 16 des Schiffsrumpfs 10 befindet. Lediglich aus Gründen der Übersichtlichkeit ist die Erhöhung LR im Beispiel von Fig. 4 größer dargestellt. Im Beispiel der Fig. 4 ist das Ende des Hecks 16 nicht gezeigt. Der Längsschnitt LS ähnelt dem Beispiel von Fig. 4 bei dem Schiffspropeller 12. Im weiteren Verlauf in Richtung des Hecks 16 würde der Schiffsrumpf 10 beziehungsweise dessen Außenkontur AK nach oben ansteigen. Vorzugsweise weist der Verlauf der Außenkontur AK ausgehend vom Startpunkt O in Richtung des Hecks 16 genau zwei Wendepunkte auf. Diese Wendepunkte sind gemäß Fig. 4 der siebte Wendepunkt W7 sowie der achte Wendepunkt W8. Diese beiden Wendepunkte kennzeichnen die Wölbung der Zwischenfläche ZF in Richtung der Wasserlinie WL.

Im Gegensatz zu den Spantenrissen SP1 und SP2 ist der in Fig. 4 gezeigte Längsschnitt LS nicht symmetrisch. Dies liegt schon allein daran, dass der Schiffsrumpf 10 im Bereich des Bugs 14 keinen Schiffspropeller 12 hat. Auch ist im Bereich des Bugs 14 keine erste Vertiefung V1 zu finden. Der Schiffspropeller 12 sowie die erste Vertiefung V1 sind tendenziell in der Nähe des Hecks 16 positioniert. Jedoch gilt auch für die Fig. 4, dass die Außenkontur AK des Schiffsrumpfs 10 im Längsschnitt LS stetig differenzierbar ist, zumindest im Bereich des Unterwasserschiffs US.

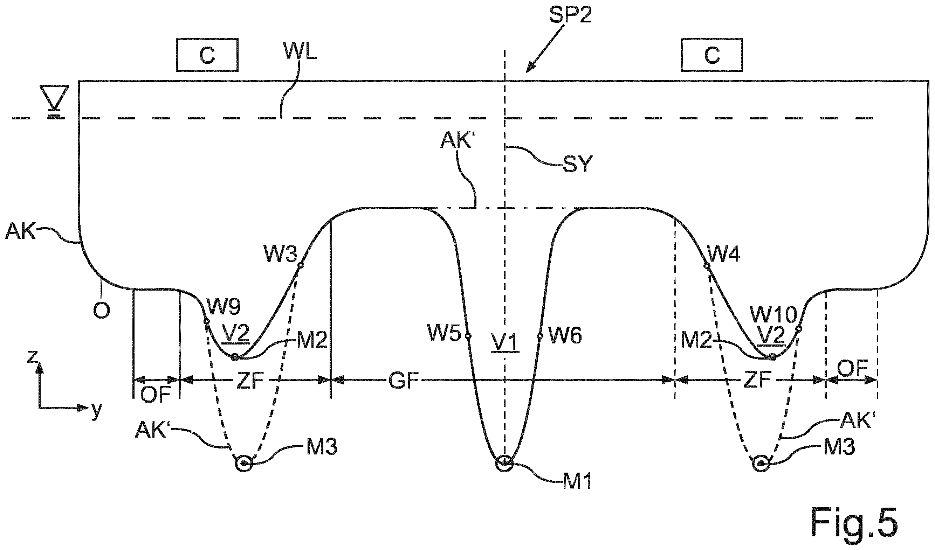

In Fig. 5 ist ein weiterer zweiter Spantenriss SP2 gezeigt. Im Gegensatz zu dem zweiten Spantenriss SP2 von Fig. 3 zeigt dieser zweite Spantenriss SP2 neben der ersten Vertiefung V1 eine weitere zweite Vertiefung V2. Diese zweite Vertiefung V2 teilt sich gemäß Fig. 5 in zwei Teilbereiche auf. Es ist zu beachten, dass die zweite Vertiefung V2 nur aufgrund der Darstellung in Form des zweiten Spantenrisses SP2 zweiteilig aussieht. Diese zweite Vertiefung V2 ist seitlich in Querrichtung (y-Richtung in Fig.5) des Spantenrisses zu der ersten Vertiefung V1 angeordnet. Ausgehend von dem Startpunkt O in Fig. 5 in positiver y-Richtung durchläuft die Außenkontur AK die Erhöhung LR. Zunächst erreicht die Außenkontur AK den angrenzenden Oberflächenabschnitt OF. Dieser linksseitige Teil des Oberflächenabschnitts OF grenzt an die Zwischenfläche ZF an. Im Gegensatz zu dem zweiten Spantenriss SP2 von Fig. 3 weist die Zwischenfläche ZF im linken Bereich der Erhöhung LR zwei Wendepunkte auf. Insbesondere kann dieser Bereich, in dem die zweite Vertiefung V2 angeordnet ist, genau zwei Wendepunkte, nämlich einen neunten Wendepunkt W9 sowie den dritten Wendepunkt W3 aufweisen. Die Außenkontur AK fällt in Fig. 5 nach dem Verlassen des Oberflächenabschnitts OF über den neunten Wendepunkt W9 in die zweite Vertiefung V2 ab. In der zweiten Vertiefung V2 wird ein lokales Minimum M2 beziehungsweise ein lokaler minimaler Wert erreicht beziehungsweise angenommen. Aufgrund der symmetrischen Form des Schiffsrumpfs 10 zur Symmetrieachse SY zeigt Fig. 5 zwei lokale Minima M2. Im weiteren Verlauf steigt die Außenkontur AK wieder in Richtung der Wasserlinie WL an und erreicht den dritten Wendepunkt W3. Vom dritten Wendepunkt W3 geht die Außenkontur AK in die horizontale Grundfläche GF über. Im Bereich der Grundfläche GF erreicht die Außenkontur AK einen maximalen Wert beziehungsweise ein maximales Niveau. Dieses maximale Niveau kann auch als Plateau bezeichnet werden.

Fig. 5 zeigt weiterhin eine gestrichelte Außenkontur AK'. Die gestrichelte Außenkontur AK' unterscheidet sich von der Außenkontur AK im Bereich der ersten Vertiefung V1 und der zweiten Vertiefung V2. Bei der zweiten Vertiefung V2 ist die Außenkontur AK' gegenüber der Außenkontur AK vertikal weiter in negative z-Richtung ausgebildet. An der untersten vertikalen Position der Außenkontur AK' der zweiten Vertiefung V2 befindet sich ein drittes Minimum M3. Dieses dritte Minimum M3 ist bevorzugt auf einer Außenkontur des dazugehörigen Wellenschnitts WS positioniert. Dies bedeutet insbesondere, dass ausgehend vom dritten Minimum in Richtung des Wellenschnitts WS die Position des Schiffspropellers 12 erreicht wird. Die Außenkontur AK' verläuft im Bereich der Symmetrieachse SY in Fig. 5 horizontal, während die andere Außenkontur AK nach unten in die erste Vertiefung V1 mit dem fünften Wendepunkt W5 und den sechsten Wendepunkt W6 mündet. Man kann sagen, dass die Außenkontur AK' im Bereich von der linken Zwischenfläche ZF bis zur rechten Zwischenfläche ZF eine Art U-Form oder eine nach unten offene Wanne ergibt. Die Strömung eines Fluids kann in diesem Bereich besser auf die Schiffspropeller geleitet werden, was den Schiffsantrieb verbessern kann.

Im Gegensatz zu dem ersten Spantenriss SP1 verläuft die Außenkontur AK nicht direkt zu dem vierten Wendepunkt W4, sondern fällt zunächst in Richtung der ersten Vertiefung V1 ab. Die erste Vertiefung V1 weist den fünften sowie den sechsten Wendepunkt auf. Im Bereich der ersten Vertiefung V1 nimmt der Verlauf der Außenkontur AK wieder ein lokales Minimum an. Die erste Vertiefung V1 gehört zu der Haltevorrichtung 15 für den Schiffspropeller 12. Das Minimum M1 der ersten Vertiefung V1 ist in Fig. 5 schematisch durch einen kleinen Kreis dargestellt. Im weiteren Verlauf der Außenkontur AK steigt dieser an und erreicht den sechsten Wendepunkt W6. Im sechsten Wendepunkt W6 erreicht die Steigung der Außenkontur AK lokal einen maximalen Wert. Das heißt kurz vor dem sechsten Wendepunkt W6 beziehungsweise kurz danach ist der Betrag der Steigung der Außenkontur nicht so groß wie im sechsten Wendepunkt W6. Die Ausführungen betreffend die Steigung der Außenkontur AK im sechsten Wendepunkt W6 gelten analog und sinngemäß für alle weiteren Wendepunkte.

Ein Wendepunkt zeichnet sich insbesondere dadurch aus, dass der Verlauf der Außenkontur AK im Wendepunkt eine mathematische Bedingung erfüllt. Gemäß den Regeln der Mathematik beträgt in einem Wendepunkt die zweite Ableitung null, während hingegen die dritte Ableitung einen Wert ungleich null annimmt. In der Praxis kann jedoch von diesem Kriterium insoweit abgewichen werden, da Fertigungstoleranzen zu berücksichtigen sind. Dies bedeutet, dass es möglich ist, dass der Verlauf der Außenkontur AK den mathematischen Anforderungen lediglich näherungsweise genügt.

Jedoch geben die Anzahl sowie die Positionen der Wendepunkte die grundsätzliche Formgebung des Schiffsrumpfs 10 wieder. Auch der zweite Spantenriss SP2 von Fig. 5 ist symmetrisch zur Symmetrieachse SY ausgebildet. Dies bedeutet, dass der weitere Verlauf der Außenkontur AK ab dem lokalen Minimum M1 der erste Vertiefung V1 in positive y-Richtung sich durch eine entsprechende Spiegelung des bis dahin gültigen Verlaufs der Außenkontur AK ergibt. Demzufolge erreicht die Außenkontur AK zwischen dem sechsten Wendepunkt W6 und dem vierten Wendepunkt W4 den maximalen Wert der Erhöhung LR. Im vierten Wendepunkt W4 hat die Außenkontur AK die Grundfläche GF bereits verlassen und befindet sich im Bereich der Zwischenfläche ZF. Die Außenkontur AK geht über den vierten Wendepunkt W4 in die zweite Vertiefung V2 über. Anschließend erreicht die Außenkontur AK einen minimalen Wert der zweiten Vertiefung V2 (Minimum M2) und geht über einen zehnten Wendepunkt W10 in den darin angrenzenden Oberflächenabschnitt OF über. Mithilfe der zweiten Vertiefung V2 kann die Erhöhung LR noch besser vom angrenzenden Oberflächenabschnitt OF abgegrenzt werden. Eine Wasserströmung zwischen der ersten und der zweiten Vertiefung kann so effektiv in Richtung der Schiffsschraube geführt werden. Aufgrund der zweiten Vertiefung V2 können zudem Strömungsabrisse SR vermindert werden, was zusätzlich die hydrodynamische Effizienz des Schiffsrumpfs 10 sowie des Container-Schiffs erhöhen kann.

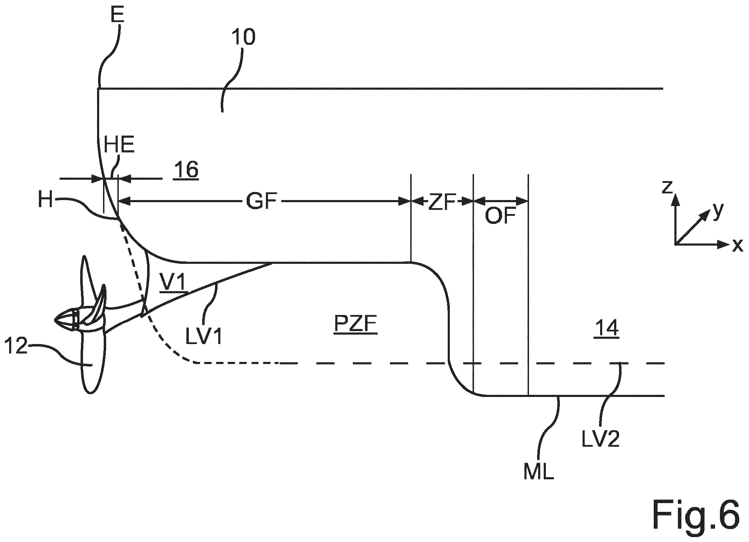

Zum besseren Verständnis des Übergangs der Erhöhung LR in die heckseitige Fläche zeigt die Fig. 6 einen weiteren Längsschnitt LS im Bereich des Hecks 16 des Schiffsrumpfs 10. Die Fig. 6 zeigt die Mittellinie ML sowie eine Begrenzungslinie LV2 der zweiten Vertiefung V2. Die Linien ML sowie LV2 weisen im bugseitigen Bereich der Fig. 6 eine unterschiedliche vertikale Position auf. Dies liegt insbesondere daran, dass entlang der y-Richtung eine Wölbung vorhanden sein kann. Die Mittellinie ML erreicht vom Bug 14 kommend den angrenzenden Oberflächenabschnitt OF. Im weiteren Verlauf in Richtung des Hecks 16 steigt diese Mittellinie ML über die Zwischenfläche ZF an und mündet beispielsweise in die ebene Grundfläche GF. Im heckseitigen Bereich der Grundfläche GF ist eine weitere Begrenzungslinie LV1 eingetragen. Diese Linie LV1 stellt eine Begrenzungslinie betreffend die erste Vertiefung V1 dar. Im größten Teil der Erhöhung LR verläuft die Linie LV2 zunächst horizontal weiter in Richtung des Hecks, während die Mittellinie ML bereits ein vertikal höheres Niveau als die Linie LV2 eingenommen hat. Da die Begrenzungslinie LV2 nur teilweise zu sehen ist, ist sie in der Fig. 6 gestrichelt dargestellt.

Im Bereich der Grundfläche GF besitzt die Linie LV2 ein unterschiedliches vertikales Niveau als die Mittellinie ML. Aufgrund dieses Unterschieds ergibt sich die Erhöhung LR. Die Begrenzungslinie LV2 steigt am heckseitigen Ende des Schiffsrumpfs 10 stärker an als die Mittellinie ML. Dies bedeutet, dass das vertikale Niveau der Linie LV2 sich mit dem vertikalen Niveau der Mittellinie ML in Richtung des Hecks 16 annähert und letztendlich angleicht. In Fig. 6 ist ebenfalls ein Bereich PZF eingezeichnet. Dieser Bereich stellt eine vertikal projizierte Zwischenfläche dar. Man erkennt klar und deutlich, dass diese projizierte Zwischenfläche PZF sich heckseitig verjüngt und die entsprechenden Begrenzungslinien ML sowie LV2 zusammenlaufen.

Ab einem Punkt H haben sich die vertikalen Positionen der Erhöhung sowie der zweiten Vertiefung V2 angeglichen. Ab diesem Punkt H in Richtung des Hecks 16 existiert nur noch eine gemeinsame heckseitige Fläche. Dieser Punkt H ist nahe an dem heckseitigen Ende des Schiffsrumpfs 10 angeordnet. Ein heckseitiges Ende des Schiffsrumpfs 10 ist durch den Punkt E gekennzeichnet. Daraus kann ein longitudinaler Abstand der beiden Punkte H und E gebildet werden. Dieser Abstand HE kann beispielsweise maximal 5 % der gesamten Längsausdehnung des Schiffsrumpfs 10 betragen. Insbesondere kann dieser Abstand HE auch weniger als 5 % der gesamten Längsausdehnung des Schiffsrumpfs 10 betragen. So ist es auch möglich, dass der Abstand HE weniger als 1 % der Länge des Schiffsrumpfs 10 beträgt.

Die Figuren 1 bis 9 sollen dabei hilfreich sein, den Schiffsrumpf 10 besser verständlich zu machen. Diese Figuren sind nicht maßstabsgetreu und dienen lediglich dazu, eine Formgebung der Erhöhung sowie die Form des Schiffsrumpfs 10 qualitativ zu beschreiben. Aus den Figuren 1 bis 9 können keine konkreten Zahlenwerte betreffend die Abmessungen oder Steigungen der Außenkontur AK abgeleitet werden, die für den Schiffsrumpf 10 als zwingende Merkmale anzusehen sind. Insbesondere kann vorgesehen sein, dass neben den Wendepunkten, welche in den Figuren 1 bis 6 gezeigt sind, keine weiteren Wendepunkte im Verlauf der Außenkontur AK auf der Unterseite des Unterwasserschiffs US angeordnet sind.

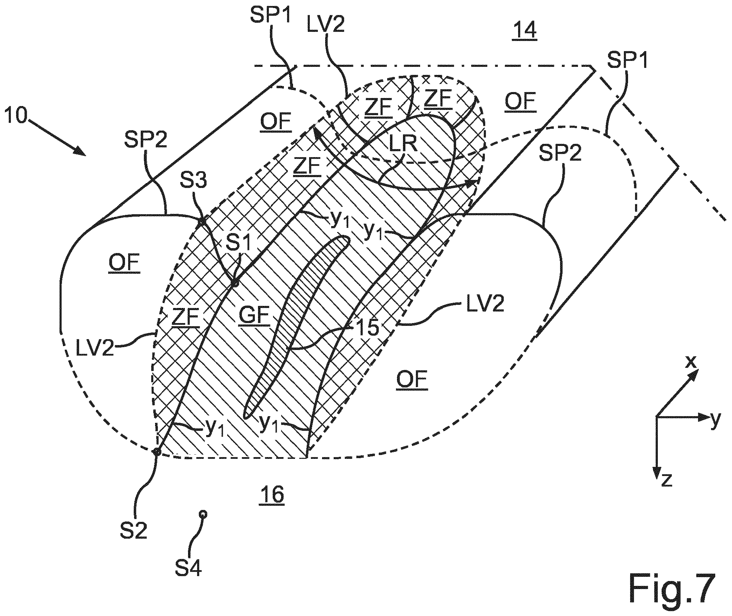

Die Fig. 7 zeigt eine schematische Ansicht auf einen Teil des Schiffsrumpfs 10, der die Erhöhung LR beinhaltet. Der bugseitige Bereich des Schiffsrumpfs 10 ist in Fig. 7 nicht dargestellt. Bei Fig. 7 ist zu beachten, dass der Schiffsrumpf 10 um 180 Grad gedreht gezeigt ist. Die z-Richtung weist im Fall der Fig. 7 nach unten. In positiver x-Richtung würde sich der Schiffsrumpf 10 zu dem Bug 14 fortsetzen. Die Erhöhung LR kann von dem angrenzenden Oberflächenabschnitt OF umgeben sein. Dies gilt jedoch nicht vollständig, denn der Oberflächenabschnitt OF umgibt die Erhöhung LR nur teilweise. Wie in Fig. 7 zu sehen ist, umschließt der angrenzende Oberflächenabschnitt OF die Erhöhung LR in negativer x-Richtung nicht. Die Erhöhung LR gliedert sich im Beispiel der Fig. 7 in die Zwischenfläche ZF und die Grundfläche GF auf. Aus Gründen der Übersichtlichkeit ist die sonst angeordnete Haltevorrichtung 15 in Fig. 7 nicht gezeigt. Anstelle dessen ist lediglich eine schraffierte Fläche im Bereich der Grundfläche GF gezeigt. Im Bereich dieser schraffierten Fläche wäre normalerweise die Haltevorrichtung 15 mit dem Schiffspropeller 12 angeordnet. Wie in Fig. 7 klar zu erkennen ist, schließt die Erhöhung LR in negativer x-Richtung in Richtung des Hecks 16 nicht ab. Die Erhöhung LR ist vielmehr in negativer x-Richtung offen ausgebildet.

Dies ist auch deutlich am Verlauf der Zwischenfläche ZF in negativer x-Richtung zu erkennen. In Richtung des Bugs 14 biegt sich die Zwischenfläche ZF in positiver beziehungsweise negativer y-Richtung zur Mittellinie ML. Damit bildet die Zwischenfläche ZF sowie die dazugehörige Grundfläche GF im bugseitigen Bereich der Erhöhung LR eine bogenförmige Form aus. In Fig. 7 ist schematisch der Verlauf der Außenkontur AK des ersten Spantenrisses SP1 gezeigt. Die Außenkontur AK des ersten Spantenrisses SP1 teilt die Erhöhung in zwei Bereiche auf. Ein erster Bereich ist in positiver x-Richtung angeordnet, ein zweiter Bereich in negativer x-Richtung. Im ersten Bereich wölbt sich die Zwischenfläche ZF derart, sodass die Grundfläche GF in den angrenzenden Oberflächenabschnitt OF überführt wird. Gleichzeitig krümmt sich die Zwischenfläche ZF in negativer beziehungsweise positiver y-Richtung, sodass der erste Bereich der Erhöhung LR bogenförmig ausgestaltet ist. Dieser erste Bereich der Erhöhung LR kann auch die Form eines Kreissegments, einer Ellipse und/oder einer Parabel annehmen.

Der zweite Bereich der Erhöhung LR ausgehend von der Außenkontur AK des ersten Spantenrisses SP1 in Richtung des Hecks 16 verläuft zunächst ähnlich wie ein Rechteck. In diesem Bereich ist beispielhaft eine Begrenzungslinie y1 eingezeichnet. Diese Begrenzungslinie y1 grenzt die Grundfläche GF von der Zwischenfläche ZF ab. Zwischen dem ersten und zweiten Spantenriss bildet diese Begrenzungslinie y1 zwei Linien aus, welche parallel verlaufen können oder in Richtung des Hecks 16 auseinanderlaufen.

Im zweiten Bereich der Erhöhung LR ist schematisch die Außenkontur AK des zweiten Spantenrisses SP2 eingetragen. Die Begrenzungslinie y1 sowie die Außenkontur AK des zweiten Spantenrisses SP2 schneiden sich in einem Punkt S1. Ausgehend von diesem Punkt S1 entlang der Begrenzungslinie y1 in Richtung des Hecks 16 steigt die Begrenzungslinie y1 an. Die Begrenzungslinie LV2 des Oberflächenabschnitts OF schneidet die Außenkontur AK des zweiten Spantenrisses SP2 in einem Punkt S3. Die Fig. 7 zeigt deutlich, wie die Begrenzungslinie y1 sowie die Begrenzungslinie LV2 ausgehend von den Punkten S1 und S3 in einem Punkt S2 zusammenlaufen, dies bedeutet, dass in Richtung des Hecks 16 der angrenzende Oberflächenabschnitt OF sich vertikal der Grundfläche GF annähert.

Die vertikale Höhe des Punktes S1 unterscheidet sich von der vertikalen Höhe des Punktes S3. Würde man die Außenkontur AK des zweiten Spantenrisses SP2 parallel in negativer x-Richtung verschieben, so würde sich der Unterschied der vertikalen Positionen der korrespondierenden Punkte entsprechend verringern. Betrachtet man die Zwischenfläche ZF im Bereich der Punkte S1, S2 und S3, so stellt man fest, dass die Begrenzungslinien der Zwischenfläche ZF in diesem Bereich im Punkt S2 zusammenlaufen. Im Beispiel der Fig. 7 steigt der angrenzende Oberflächenabschnitt OF in Richtung des Hecks 16 stärker an als die Grundfläche GF der Erhöhung LR. Dies führt dazu, dass der angrenzende Oberflächenabschnitt OF in die Erhöhung LR beziehungsweise in die Grundfläche GF der Erhöhung LR übergeht. Dies ergibt die in Fig. 7 gezeigte nach hinten offene Form der Erhöhung LR. Ausgehend von dem Punkt S2 in negative x-Richtung schließt sich die gemeinsame heckseitige Fläche an. In diesem Bereich kann nicht länger zwischen den einzelnen Flächenbestandteilen OF, ZF und GF unterschieden werden.

Ein Punkt S4 ist beispielhaft im Bereich dieser heckseitigen Fläche gezeigt. Dieser Punkt S2 kann weder der Zwischenfläche ZF noch dem angrenzenden Oberflächenabschnitt OF zugeordnet werden. Die Fläche im Bereich des Punktes S4 kann zwar gewölbt sein, weist jedoch keine wie in Fig. 7 dargestellte Erhöhung LR mehr auf. Es ist zu beachten, dass die heckseitige Fläche im weiteren Verlauf in Richtung der negativen x-Richtung in Richtung der Wasserlinie ansteigt. Der Oberflächenabschnitt OF, die Zwischenfläche ZF sowie die Grundfläche GF gehen im Punkt S2 in die heckseitige Fläche über. Dieser Übergang ist jedoch in der Regel nicht wie in Fig. 7 gezeigt abrupt an einem Punkt realisiert, sondern diese Flächen gehen meist fließend in die heckseitige Fläche über. Die heckseitige Fläche, die sich in negative x-Richtung an die Zwischenfläche ZF, den angrenzenden Oberflächenabschnitt OF und/oder die Grundfläche GF anschließt, entspricht dabei in der Regel der Oberfläche eines Schiffsrumpfs 10, wie er bereits bekannt ist.

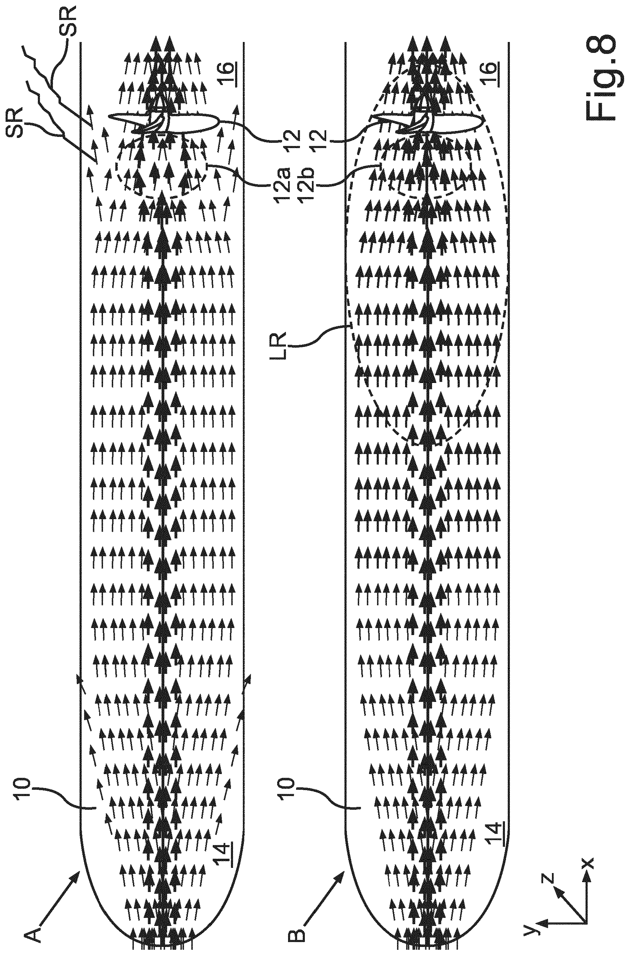

Die Fig. 8 zeigt schematisch zwei unterschiedliche Varianten von Schiffsrümpfen A sowie B. Die Variante A entspricht dabei einem gewöhnlichen Schiffsrumpf 10, die Variante B entspricht einem Schiffsrumpf 10, der die Erhöhung LR aufweist. Die Pfeile in Fig. 8 sollen schematisch einen Verlauf der Wasserströmung zeigen. Zu beachten ist jedoch, dass in Fig. 8 die dargestellte Strömung lediglich schematisch gezeigt ist. Die Fig. 8 soll verdeutlichen, welche technische Wirkung der Schiffsrumpf 10 mit der Erhöhung LR, also die Variante B, gegenüber einem gewöhnlichen Schiffsrumpf 10 der Variante A hat. Die Variante A sowie die Variante B unterscheiden sich baulich im Beispiel der Fig. 8 ausschließlich durch die Erhöhung LR. Dies führt dazu, dass das Strömungsprofil der beiden Varianten A und B unterschiedlich ist.

Der Bereich der Erhöhung LR ist in der Variante B durch eine Ellipse angedeutet. Bereits vor der Erhöhung LR ist in Variante B eine höhere Fluidgeschwindigkeit zu erkennen. Dies ist in Fig. 8 durch etwas dickere Pfeile bei der Variante B im Vergleich zur Variante A angedeutet. Auch im Bereich der Erhöhung ist eine höhere Fluidgeschwindigkeit zu erkennen. Dies liegt insbesondere an einer verbesserten Wasserführung oder Anströmung des Schiffspropellers. Von besonderem Interesse ist dabei der Bereich um den Schiffspropeller 12. Dieser Bereich ist in Fig. 8 mit dem Bezugszeichen 12a für die Variante A beziehungsweise 12b für die Variante B gekennzeichnet. Bei der Variante A ist zu erkennen, dass die Wasserströmung teilweise zur Seite aus dem Bereich des Schiffspropellers 12 strömt und aus dem Schiffsrumpf 10 herausströmt. Dieses "Ausströmen" ist in Variante A auch im Bereich des Bugs 14 zu erkennen. Dies führt dazu, dass bei der Variante A tendenziell ein höherer Wasser-Volumenstrom an dem Schiffspropeller 12 vorbei fließt. Im Gegensatz dazu ist die Wasserströmung bei der Variante B im Bereich 12b etwas stärker verdichtet angedeutet als im Fall der Variante A. Dies bedeutet, dass durch die Erhöhung LR wenigstens ein Teil der Wasserströmung effektiver und besser zu dem Schiffspropeller 12 fokussiert wird. Somit kann die Wasserströmung unterhalb des Schiffsrumpfs 10 zusätzlich für einen Antrieb des Container-Schiffs oder eines beliebig anderen Schiffs oder Boots genutzt werden.

Bei der Variante A ist schematisch ein Strömungsabriss SR eingezeichnet. Damit soll angedeutet werden, dass in der Variante A ein Teil der Wasserströmung aus dem Bereich des Schiffsrumpfs 10 sich herauslöst und seitlich abdriftet. Eine solche Wasserströmung kann den hydrodynamischen Widerstand erhöhen und ist zudem nicht länger für den Schiffspropeller 12 nutzbar. Zudem können sich bei der Variante A mehr hydrodynamische Turbulenzen ergeben. Durch die dargestellte Formgebung der Erhöhung LR wird die Wasserströmung unterhalb des Schiffsrumpfs 10 besser und gezielter auf die Schiffsschraube gelenkt. Deshalb ist im Bereich 12b der Variante B eine verdichtete Strömung zu erkennen. Dabei bedeutet der Begriff "verdichtete Strömung" nicht, dass das Wasser dort eine höhere Dichte aufweist. Vielmehr soll damit zum Ausdruck gebracht werden, dass in diesem Bereich die Wasserströmung einen höheren Durchfluss aufweisen kann. Zudem kann der vorgestellte Schiffsrumpf 10 die Turbulenzen im Vergleich zu Variante A reduzieren. Die Wirkung der Variante B mit der Erhöhung LR kann auch mit der ähnlich eines Trichters beschrieben werden, wenn auch diese Darstellung vereinfacht ist. Die Wasserströmung wird kontinuierlich auf einen Bereich um den Schiffspropeller 12 fokussiert beziehungsweise gebündelt.

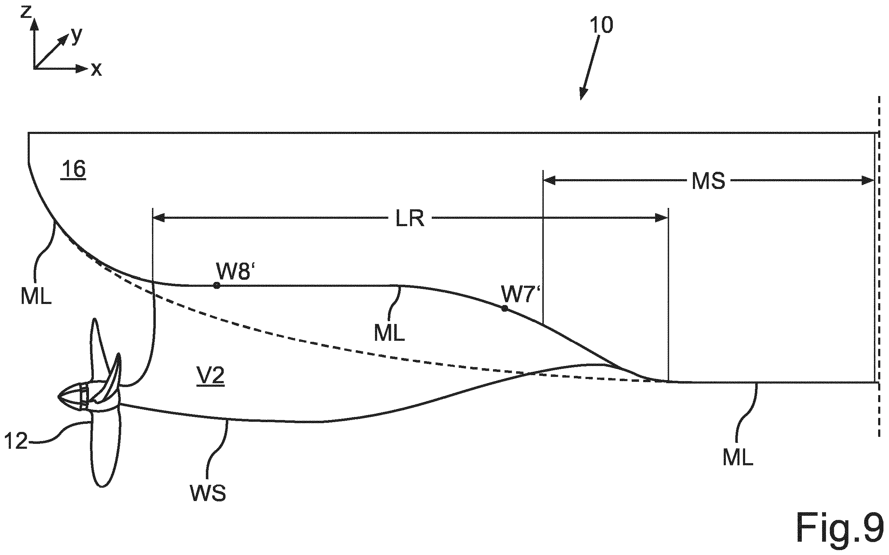

Fig. 9 zeigt eine schematische Darstellung des Schiffsrumpfs 10 im Längsschnitt LS mit der zweiten Vertiefung V2 als Haltevorrichtung 15 für den Schiffspropeller 12. Die Fig. 9 zeigt insbesondere eine mögliche Ausführungsform gemäß Anspruch 2. Gegenüber dem Heck 16 ist ein Bereich des Mittschiffs MS angedeutet. Der Bereich des Mittschiffs MS kann als Mittelbereich des Schiffsrumpfs 10 verstanden werden, der die Mitte beinhaltet. Die Fig. 9 zeigt schematisch einen Schnitt entlang der Mittellinie ML sowie entlang des Wellenschnitts WS. Die Linie des Wellenschnitts WS hat gegenüber der Mittellinie ML eine unterschiedliche Position bezüglich der y-Richtung oder y-Koordinate. Entlang der Mittellinie ML ist ein weiterer siebter Wendepunkt W7' und ein weiterer achte Wendepunkt W8' gezeigt. Diese beiden Wendepunkte befinden sich im Bereich der Erhöhung LR. Ausgehend vom weiteren achten Wendepunkt W8' mündet die Mittellinie ML in das Heck 16 des Schiffsrumpfs 10. Auf der Unterseite des Schiffsrumpfs 10 ist eine gestrichelte Linie eingetragen, welche im Vergleich zur Mittellinie weiter unten verläuft. Diese gestrichelte Linie zeigt an, wie der Schiffsrumpf 10 bei einem üblichen Container-Schiff verlaufen würde. Gegenüber dieser gestrichelten Linie ist der Verlauf der Erhöhung LR klar zu erkennen.

Vom Bereich des Mittschiffs MS kommend ist eine nach unten abfallende Linie des Wellenschnitts WS gezeigt. Diese zum Wellenschnitt WS gehörende Linie kann der zweiten Vertiefung V2 zugrechnet werden, die sich seitlich von der Mittellinie befindet. Entlang dieser zum Wellenschnitt WS gehörenden Linie gelangt man in negative x-Richtung zum Schiffspropeller 12. Die in Fig. 9 gezeigte zweite Vertiefung V2 ist meistens zweimal vorhanden. Eine zweite Vertiefung V2 ist meistens links, zum Beispiel in positive y-Richtung angeordnet. Eine weitere zusätzliche zweite Vertiefung V2 ist oft rechts angeordnet, also gegenüber der linken zweiten Vertiefung V2. Bevorzugt ergibt sich gemäß dem Beispiel von Fig. 9 stets eine gerade Anzahl von zweiten Vertiefungen V2 sowie eine gerade Anzahl von Schiffspropellern.

Die in Fig. 8 gezeigten Ergebnisse sind ein Resultat einer CFD-Simulation. Das Ergebnis dieser Simulationen konnte auch bei experimentellen Versuchen qualitativ nachgewiesen werden. Ein Schiffsrumpf 10 mit der Erhöhung LR, also die Variante B, optimiert die Wasserströmung im Bereich der Schiffsschraube. Dadurch kann die die Schiffsschraube umgebende Wasserströmung besser und effizienter für den Schiffsantrieb genutzt werden. Darüber hinaus kann der Schiffsrumpf 10 nach der Variante B hydrodynamische Widerstände deutlich reduzieren.

## Patentansprüche

1. Schiffsrumpf (10) insbesondere für ein Container-Schiff, einen Bulkcarrier oder einen Tanker mit
- einer Erhöhung (LR) einer Außenkontur (AK) des Schiffsrumpfs (10) in Bezug auf eine nach oben gerichtete Vertikalrichtung (z) des Schiffsrumpfs (10) im Bereich eines ersten und zweiten Spantenrisses (SP1, SP2) gegenüber einem an die Erhöhung (LR) unmittelbar angrenzenden Oberflächenabschnitt (OF), wobei die Erhöhung (LR) in einem Bereich zwischen einer Mitte und einem Heck (16) des Schiffsrumpfs (10) angeordnet ist und die Erhöhung (LR) auf einer Unterseite (US) des Schiffsrumpfs (10) befindlich ist, **dadurch gekennzeichnet, dass**
- die Außenkontur (AK) in dem ersten Spantenriss (SP1), der in einem bugseitigen Bereich der Erhöhung (LR) verläuft, einen ersten Wendepunkt (W1) und einen zweiten Wendepunkt (W2) aufweist und die Außenkontur (AK) in dem ersten Spantenriss (SP1) in einem Bereich einer Mitte der Erhöhung (LR) einen maximalen Wert in Bezug auf die Vertikalrichtung (z) erreicht,
- die Außenkontur (AK) in dem zweiten Spantenriss (SP2), der gegenüber dem ersten Spantenriss (SP1) sich näher am Heck (16) des Schiffsrumpfes (10) befindet, mittig in der Erhöhung (LR) eine erste Vertiefung (V1) mit einem dritten Wendepunkt (W3) und einem vierten Wendepunkt (W4) aufweist, wobei die erste Vertiefung (V1) Teil einer Haltevorrichtung (15) für eine Schiffspropellerwelle zum Aufnehmen eines Schiffspropellers (12) ist,
- die Außenkontur (AK) in dem zweiten Spantenriss (SP2) einen fünften Wendepunkt (W5) und einen sechsten Wendepunkt (W6) aufweist, wobei der dritte Wendepunkt (W3) gegenüber dem fünften Wendepunkt (W5) in Bezug auf die erste Vertiefung (V1) quer zum Schiffsrumpf (10) weiter außen liegt und der vierte Wendepunkt (W4) gegenüber dem sechsten Wendepunkt (W6) in Bezug auf die erste Vertiefung (V1) quer zum Schiffsrumpf (10) weiter außen liegt,
- die Außenkontur (AK) in einem Längsschnitt (LS) des Schiffsrumpfs (10) entlang einer vorgegebenen Mittellinie (ML) der Erhöhung (LR) bugseitig im Bereich der Erhöhung (LR) einen siebten Wendepunkt (W7) aufweist und heckseitig über einen achten Wendepunkt (W8) aus der Erhöhung (LR) in die erste Vertiefung (V1) übergeht,
- am heckseitigen Ende der Erhöhung (LR) entlang des Längsschnitts (LS) in Richtung des Hecks (16) eine vertikale Position der Erhöhung (LR) sich mit einer vertikalen Position des dazu angrenzenden Oberflächenabschnitts (OF) angleicht.

2. Schiffsrumpf (10) insbesondere für ein Container-Schiff, einen Bulkcarrier oder einen Tanker mit
- einer Erhöhung (LR) einer Außenkontur (AK, AK`) des Schiffsrumpfs (10) in Bezug auf eine nach oben gerichtete Vertikalrichtung (z) des Schiffsrumpfs (10) im Bereich eines ersten und zweiten Spantenrisses (SP1, SP2) gegenüber einem an die Erhöhung (LR) unmittelbar angrenzenden Oberflächenabschnitt (OF), wobei die Erhöhung (LR) in einem Bereich zwischen einer Mitte und einem Heck (16) des Schiffsrumpfs (10) angeordnet ist und die Erhöhung (LR) auf einer Unterseite (US) des Schiffsrumpfs (10) befindlich ist, **dadurch gekennzeichnet, dass**
- die Außenkontur (AK, AK') in dem ersten Spantenriss (SP1), der in einem bugseitigen Bereich der Erhöhung (LR) verläuft, einen ersten Wendepunkt (W1) und einen zweiten Wendepunkt (W2) aufweist und die Außenkontur (AK, AK') in dem ersten Spantenriss (SP1) in einem Bereich einer Mitte der Erhöhung (LR) einen maximalen Wert in Bezug auf die Vertikalrichtung (z) erreicht,
- die Außenkontur (AK, AK') in dem zweiten Spantenriss (SP2) sich gegenüber dem ersten Spantenriss (SP1) näher am Heck (16) des Schiffsrumpfes (10) befindet, und
- die Außenkontur (AK, AK') in dem zweiten Spantenriss (SP2) entlang einer Querrichtung des Schiffsrumpfes (10) beiderseits der Erhöhung (LR) jeweils eine zweite Vertiefung (V2) mit einem neunten Wendepunkt (W9) und einem zehnten Wendepunkt (W10) aufweist, wobei jede zweite Vertiefung (V2) Teil einer Haltevorrichtung (15) für jeweils eine Schiffspropellerwelle zum Aufnehmen eines jeweiligen Schiffspropellers (12) ist,
- die Außenkontur (AK, AK') in dem zweiten Spantenriss (SP2) in einem Bereich der Mitte der Erhöhung (LR) einen weiteren maximalen Wert in Bezug auf die Vertikalrichtung (z) erreicht,
- die Außenkontur (AK, AK') in einem Längsschnitt (LS) des Schiffsrumpfs (10) entlang einer vorgegebenen Mittellinie (ML) der Erhöhung (LR) bugseitig im Bereich der Erhöhung (LR) einen siebten Wendepunkt (W7') aufweist und heckseitig über einen achten Wendepunkt (W8') aus der Erhöhung (LR) in einen heckseitigen Abschnitt des Schiffsrumpfs (10) übergeht,
- am heckseitigen Ende der Erhöhung (LR) entlang des Längsschnitts (LS) in Richtung des Hecks (16) eine vertikale Position der Erhöhung (LR) sich mit einer vertikalen Position des dazu angrenzenden Oberflächenabschnitts (OF) angleicht.

3. Schiffsrumpf (10) nach Anspruch 1 oder 2, wobei eine Längsausdehnung der Erhöhung (LR), eine Querausdehnung der Erhöhung und/oder eine Vertikalausdehnung der Erhöhung (LR) in Abhängigkeit von einer vorgegebenen Funktion mit einer Lastanforderung festgelegt sind.

4. Schiffsrumpf (10) nach einem der vorigen Ansprüche, wobei die Erhöhung (LR) zum Heck hin in Richtung einer vorgegebenen Wasserlinie (WL) ansteigt.

5. Schiffsrumpf (10) nach einem der vorigen Ansprüche, wobei die Erhöhung (LR) eine Grundfläche (GF) aufweist und ein Teil der Grundfläche (GF), der dem Bugbereich zugewandt ist, als Ellipsensegment, Parabelsegment und/oder Kreissegment ausgebildet ist.

6. Schiffsrumpf (10) nach Anspruch 5, wobei zwei Begrenzungslinien (y1) der Grundfläche (GF) der Erhöhung (LR) zumindest in der heckseitigen Hälfte der Erhöhung (LR) in Längsrichtung zueinander stets einen gleichen Abstand aufweisen.

7. Schiffsrumpf (10) nach einem der Ansprüche 1 und 3 bis 6, wobei die Erhöhung (LR) eine an den Oberflächenabschnitt (OF) unmittelbar angrenzende Zwischenfläche (ZF) aufweist und eine Projektion der Zwischenfläche (ZF) senkrecht zur Vertikalrichtung (z) und/oder parallel zu einer Querrichtung auf eine vertikale Fläche sich heckseitig derart verjüngt, sodass in Längsrichtung des Schiffsrumpfs (10) zum Heck (16) die Erhöhung (LR) und der angrenzende Oberflächenabschnitt (OF) ineinander in eine gemeinsame heckseitige Fläche des Schiffsrumpfs (10) übergehen.

8. Schiffsrumpf (10) nach einem der Ansprüche 5 bis 7, wobei die Grundfläche (GF) und/oder die Zwischenfläche (ZF) eine Wölbung in Richtung der vorgegebenen Wasserlinie (WL) aufweisen.

9. Schiffsrumpf (10) nach Anspruch 8, wobei die Außenkontur (AK) in dem ersten Spantenriss (SP1) im bugseitigen Bereich der Erhöhung (LR) entlang einer vorgegebenen Querrichtung des Schiffsrumpfs (10) von dem angrenzenden Oberflächenabschnitt (OF) in die gewölbte Zwischenfläche (ZF) mit dem ersten Wendepunkt (W1) übergeht, die Außenkontur (AK) im Anschluss in die Grundfläche (GF) übergeht, die Außenkontur nach der Grundfläche (GF) wieder in die gewölbte Zwischenfläche (ZF) mit dem zweiten Wendepunkt (W2) übergeht, wobei eine dritte mathematische Ableitung eines Verlauf der Außenkontur (AK) des ersten Spantenrisses (SP1) im ersten Wendepunkt (W1) ein unterschiedliches Vorzeichen zum zweiten Wendepunkt (W2) hat und die Außenkontur (AK) keine weiteren Wendepunkte aufweist.

10. Schiffsrumpf (10) nach einem der Ansprüche 3 bis 9 mit dem Schiffspropeller (12), wobei die Querausdehnung der Erhöhung (LR) senkrecht zu der Längsrichtung des Schiffsrumpfes (10) in Abhängigkeit von einer Breite des Schiffspropellers (12) festgelegt ist, wobei insbesondere die Querausdehnung der Erhöhung (LR) maximal 1/3 einer Breite des Schiffsrumpfes (10) beträgt.

11. Schiffsrumpf (10) nach Anspruch 10, wobei die Querausdehnung der Erhöhung (LR) einen Wert zwischen 80 % bis 150 % der Breite des Schiffspropellers (12) annimmt, insbesondere um 15 bis 25 %, bevorzugt um 20 %, größer ist als die Breite des Schiffspropellers (12).

12. Schiffsrumpf (10) nach einem der Ansprüche 1 und 3 bis 11, wobei die Außenkontur (AK) in dem ersten Spantenriss (SP1) und/oder die Außenkontur (AK) in dem zweiten Spantenriss (SP2) entlang einer Querrichtung des Schiffsrumpfes (10) beiderseits der Erhöhung (LR) jeweils eine zweite Vertiefung (V2) mit einem neunten Wendepunkt (W9) und einem zehnten Wendepunkt (W10) aufweist.

13. Schiffsrumpf (10) nach einem der Ansprüche 7 bis 12, wobei am heckseitigen Ende der Erhöhung (LR) entlang des Längsschnitts (LS) in Richtung des Hecks (16) eine vertikale Position der heckseitigen Fläche sich mit der vertikalen Position der Erhöhung (LR) angleicht.

## Claims

1. A hull (10) in particular for a container ship, a bulk carrier or a tanker comprising
- an elevation (LR) of an outer contour (AK) of the hull (10) with respect to an upwards directed vertical direction (z) of the hull (10) in the region of a first and a second body plan (SP1, SP2) in relation to a surface section (OF) immediately adjoining to the elevation (LR), wherein the elevation (LR) is arranged in a region between a middle and a stern (16) of the hull (10) and the elevation (LR) is located on a bottom side (US) of the hull (10),
**characterized in that**
- the outer contour (AK) in the first body plan (SP1), which extends in a bow-side region of the elevation (LR), comprises a first turning point (W1) and a second turning point (W2) and the outer contour (AK) in the first body plan (SP1) reaches a maximum value with respect to the vertical direction (z) in a region of a center of the elevation (LR),
- the outer contour (AK) in the second body plan (SP2), which is located closer to the stern (16) of the hull (10) in relation to the first body plan (SP1), comprises a first depression (V1) with a third turning point (W3) and a fourth turning point (W4) centrally in the elevation (LR), wherein the first depression (V1) is a part of a retaining device (15) for a ship propeller shaft for receiving a ship propeller (12),
- the outer contour (AK) in the second body plan (SP2) comprises a fifth turning point (W5) and a sixth turning point (W6), wherein the third turning point (W3) is located farther outwards with respect to the first depression (V1) transversely to the hull (10) in relation to the fifth turning point (W5) and the fourth turning point (W4) is located farther outwards with respect to the first depression (V1) transversely to the hull (10) in relation to the sixth turning point (W6),
- the outer contour (AK) comprises a seventh turning point (W7) in a longitudinal section (LS) of the hull (10) along a preset central line (ML) of the elevation (LR) on the bow-side in the region of the elevation (LR) and transitions from the elevation (LR) into the first depression (V1) over an eighth turning point (W8) on the stern-side,
- a vertical position of the elevation (LR) adapts to a vertical position of the surface section (OF) adjoining thereto at the stern-side end of the elevation (LR) along the longitudinal section (LS) in the direction of the stern (16).

2. A hull (10) in particular for a container ship, a bulk carrier or a tanker comprising
- an elevation (LR) of an outer contour (AK, AK') of the hull (10) with respect to an upwards directed vertical direction (z) of the hull (10) in the region of a first and a second body plan (SP1, SP2) in relation to a surface section (OF) immediately adjoining to the elevation (LR), wherein the elevation (LR) is arranged in a region between a middle and a stern (16) of the hull (10) and the elevation (LR) is located on a bottom side (US) of the hull (10),
**characterized in that**
- the outer contour (AK, AK') in the first body plan (SP1), which extends in a bow-side region of the elevation (LR), comprises a first turning point (W1) and a second turning point (W2) and the outer contour (AK, AK') in the first body plan (SP1) reaches a maximum value with respect to the vertical direction (z) in a region of a center of the elevation (LR),
- the outer contour (AK, AK') in the second body plan (SP2) is located closer to the stern (16) of the hull (10) in relation to the first body plan (SP1), and
- the outer contour (AK, AK') in the second body plan (SP2) comprises each one second depression (V2) with a ninth turning point (W9) and a tenth turning point (W10) along a transverse direction of the hull (10) on both sides of the elevation (LR), wherein each second depression (V2) is a part of a retaining device (15) for each one ship propeller shaft for receiving a respective ship propeller (12),
- the outer contour (AK, AK') in the second body plan (SP2) reaches a further maximum value with respect to the vertical direction (z) in a region of the center of the elevation (LR),
- the outer contour (AK, AK') comprises a seventh turning point (W7') in a longitudinal section (LS) of the hull (10) along a preset central line (ML) of the elevation (LR) on the bow-side in the region of the elevation (LR) and transitions from the elevation (LR) into a stern-side section of the hull (10) over an eighth turning point (W8') on the stern side
- a vertical position of the elevation (LR) adapts to a vertical position of the surface section (OF) adjoining thereto at the stern-side end of the elevation (LR) along the longitudinal section (LS) in the direction of the stern (16).

3. The hull (10) according to claim 1 or 2, wherein a longitudinal extension of the elevation (LR), a transverse extension of the elevation and/or a vertical extension of the elevation (LR) are set depending on a preset function with a load requirement.

4. The hull (10) according to any one of the preceding claims, wherein the elevation (LR) rises in the direction of a preset water line (WL) towards the stern.

5. The hull (10) according to any one of the preceding claims, wherein the elevation (LR) comprises a base area (GF) and a part of the base area (GF), which faces the bow region, is formed as an elliptical segment, parabolic segment and/or circular segment.

6. The hull (10) according to claim 5, wherein two bounding lines (y1) of the base area (GF) of the elevation (LR) always have an identical distance to each other in longitudinal direction at least in the stern-side half of the elevation (LR).

7. The hull (10) according to any one of claims 1 and 3 to 6, wherein the elevation (LR) comprises an intermediate area (ZF) immediately adjoining to the surface section (OF) and a projection of the intermediate area (ZF) to a vertical area perpendicular to the vertical direction (z) and/or parallel to a transverse direction tapers on the stern side such that the elevation (LR) and the adjoining surface section (OF) transition into each other into a common stern-side area of the hull (10) in longitudinal direction of the hull (10) to the stern (16).

8. The hull (10) according to any one of claims 5 to 7, wherein the base area (GF) and/or the intermediate area (ZF) comprise a curvature in the direction of the preset water line (WL).

9. The hull (10) according to claim 8, wherein the outer contour (AK) in the first body plan (SP1) transitions from the adjoining surface section (OF) into the curved intermediate area (ZF) with the first turning point (W1) in the bow-side region of the elevation (LR) along a preset transverse direction of the hull (10), the outer contour (AK) subsequently transitions into the base area (GF), the outer contour again transitions into the curved intermediate area (ZF) with the second turning point (W2) after the base area (GF), wherein a third mathematic derivative of a progression of the outer contour (AK) of the first body plan (SP1) in the first turning point (W1) has a sign different from the second turning point (W2) and the outer contour (AK) does not comprise further turning points.

10. The hull (10) according to any one of claims 3 to 9 with the ship propeller (12), wherein the transverse extension of the elevation (LR) perpendicular to the longitudinal direction of the hull (10) is set depending on a width of the ship propeller (12), wherein in particular the transverse extension of the elevation (LR) is maximally 1/3 of a width of the hull (10).

11. The hull (10) according to claim 10, wherein the transverse extension of the elevation (LR) assumes a value between 80 % and 150 % of the width of the ship propeller (12), in particular is larger by 15 to 25 %, preferably by 20 %, than the width of the ship propeller (12).

12. The hull (10) according to any one of claims 1 and 3 to 11, wherein the outer contour (AK) in the first body plan (SP1) and/or the outer contour (AK) in the second body plan (SP2) comprise a second depression (V2) with a ninth turning point (W9) and a tenth turning point (W10) on both sides of the elevation (LR) along a transverse direction of the hull (10).

13. The hull (10) according to any one of claims 7 to 12, wherein a vertical position of the stern-side area adapts to the vertical position of the elevation (LR) at the stern-side end of the elevation (LR) along the longitudinal section (LS) in the direction of the stern (16).

## Revendications

1. Coque de navire (10), en particulier pour un navire porte-conteneurs, un vraquier ou un pétrolier, comprenant
- une élévation (LR) d'un contour extérieur (AK) de la coque de navire (10) par rapport à une direction verticale ascendante (z) de la coque de navire (10) dans la zone d'un premier et d'un deuxième plan de membrure (SP1, SP2) vis-à-vis d'une section de surface (OF) directement adjacente à l'élévation (LR), l'élévation (LR) étant située dans une zone entre un centre et une poupe (16) de la coque (10) et l'élévation (LR) étant située sur un côté inférieur (US) de la coque (10), **caractérisée par le fait que**
- le contour extérieur (AK) présente un premier point d'inflexion (W1) et un deuxième point d'inflexion (W2) dans le premier plan de membrure (SP1) qui s'étend dans une zone du côté proue de l'élévation (LR), et le contour extérieur (AK) atteint une valeur maximale par rapport à la direction verticale (z) dans le premier plan de membrure (SP1) dans une zone d'un centre de l'élévation (LR),
- le contour extérieur (AK) dans le deuxième plan de membrure (SP2), lequel se trouve plus près de la poupe (16) de la coque (10) par rapport au premier plan de membrure (SP1), présente, au centre de l'élévation (LR), un premier creux (V1) avec un troisième point d'inflexion (W3) et un quatrième point d'inflexion (W4), le premier creux (V1) faisant partie d'un dispositif de maintien (15) pour un arbre d'hélice de navire destiné à recevoir une hélice de navire (12),
- le contour extérieur (AK) dans le deuxième plan de membrure (SP2) présente un cinquième point d'inflexion (W5) et un sixième point d'inflexion (W6), le troisième point d'inflexion (W3) étant situé plus à l'extérieur vis-à-vis du cinquième point d'inflexion (W5) par rapport au premier creux (V1) transversal à la coque (10) du navire et le quatrième point d'inflexion (W4) étant situé plus à l'extérieur par rapport au sixième point d'inflexion (W6) par rapport au premier creux (V1) transversal à la coque (10) du navire,
- le contour extérieur (AK) présente, dans une coupe longitudinale (LS) de la coque (10) le long d'une ligne médiane (ML) prédéfinie de l'élévation (LR), côté proue, dans la zone de l'élévation (LR), un septième point d'inflexion (W7) et, côté poupe, passe de l'élévation (LR) au premier creux (V1) via un huitième point d'inflexion (W8),
- à l'extrémité arrière de l'élévation (LR), le long de la section longitudinale (LS) en direction de la poupe (16), une position verticale de l'élévation (LR) est ajustée à une position verticale de la section de surface (OF) adjacente à celle-ci.

2. Coque de navire (10), en particulier pour un navire porte-conteneurs, un vraquier ou un pétrolier, comprenant
- une élévation (LR) d'un contour extérieur (AK, AK') de la coque de navire (10) par rapport à une direction verticale ascendante (z) de la coque de navire (10) dans la zone d'un premier et d'un deuxième plan de membrure (SP1, SP2) vis-à-vis d'une section de surface (OF) directement adjacente à l'élévation (LR), l'élévation (LR) étant située dans une zone située entre un centre et une poupe (16) de la coque (10) et l'élévation (LR) étant située sur un côté inférieur (US) de la coque (10), **caractérisé par le fait que**
- le contour extérieur (AK, AK') présente un premier point d'inflexion (W1) et un deuxième point d'inflexion (W2) dans le premier plan de membrure (SP1) qui s'étend dans une zone côté proue de l'élévation (LR), et le contour extérieur (AK, AK') dans le premier plan de membrure (SP1) atteint une valeur maximale par rapport à la direction verticale (z) dans une zone d'un centre de l'élévation (LR),
- le contour extérieur (AK, AK') dans le deuxième plan de membrure (SP2) se trouve plus près de la poupe (16) de la coque (10) vis-à-vis du premier plan de membrure (SP1), et
- le contour extérieur (AK, AK') présente dans le deuxième plan de membrure (SP2), le long d'une direction transversale de la coque (10), de part et d'autre de l'élévation (LR), respectivement un deuxième creux (V2) avec un neuvième point d'inflexion (W9) et un dixième point d'inflexion (W10), chaque deuxième creux (V2) faisant partie d'un dispositif de maintien (15) pour respectivement un arbre d'hélice de navire destiné à recevoir une hélice de navire (12) respective,
- le contour extérieur (AK, AK') dans le deuxième plan de membrure (SP2) atteint dans une zone du centre de l'élévation (LR) une autre valeur maximale par rapport à la direction verticale (z),
- le contour extérieur (AK, AK') présente, dans une coupe longitudinale (LS) de la coque (10) le long d'une ligne médiane (ML) prédéfinie de l'élévation (LR), côté proue, dans la zone de l'élévation (LR), un septième point d'inflexion (W7') et passe, côté poupe, de l'élévation (LR) à une section arrière de la coque (10) via un huitième point d'inflexion (W8'),
- à l'extrémité arrière de l'élévation (LR), le long de la section longitudinale (LS) en direction de la poupe (16), une position verticale de l'élévation (LR) s'aligne sur une position verticale de la section de surface (OF) adjacente à celle-ci.

3. Coque de navire(10) selon la revendication 1 ou 2, dans laquelle une extension longitudinale de l'élévation (LR), une extension transversale de l'élévation et/ou une extension verticale de l'élévation (LR) sont déterminées avec une exigence de chargement selon une fonction prédéfinie.

4. Coque de navire (10) selon l'une des revendications précédentes, dans laquelle l'élévation (LR) augmente vers la poupe en direction d'une ligne de flottaison (WL) prédéfinie.

5. Coque de navire (10) selon l'une des revendications précédentes, dans laquelle l'élévation (LR) présente une surface de base (GF) et une partie de la surface de base (GF), qui est tournée vers la zone de la proue, est réalisée sous forme de segment elliptique, de segment parabolique et/ou de segment circulaire.

6. Coque de navire (10) selon la revendication 5, dans laquelle deux lignes de délimitation (y1) de la surface de base (GF) de l'élévation (LR) présentent toujours une même distance l'une par rapport à l'autre dans la direction longitudinale, au moins dans la moitié de l'élévation (LR) située du côté de la poupe.

7. Coque de navire (10) selon l'une des revendications 1 et 3 à 6, dans laquelle l'élévation (LR) présente une surface intermédiaire (ZF) directement adjacente à la section de surface (OF) et une projection de la surface intermédiaire (ZF) perpendiculairement à la direction verticale (z) et/ou parallèlement à une direction transversale sur une surface verticale se rétrécit du côté de la poupe de telle sorte que, dans la direction longitudinale de la coque (10) vers la poupe (16), l'élévation (LR) et la section de surface(OF) adjacente se fondent l'une dans l'autre en une surface arrière commune de la coque (10).

8. Coque de navire (10) selon l'une des revendications 5 à 7, dans laquelle la surface de base (GF) et/ou la surface intermédiaire (ZF) présentent une courbure en direction de la ligne de flottaison (WL) prédéfinie.

9. Coque de navire (10) selon la revendication 8, dans laquelle le contour extérieur (AK) dans le premier plan de membrure (SP1) dans la zone côté proue de l'élévation (LR) le long d'une direction transversale prédéfinie de la coque de navire (10) passe de la section de surface adjacente (OF) à la surface intermédiaire bombée (ZF) avec le premier point d'inflexion (W1), le contour extérieur (AK) passe ensuite à la surface de base (GF), le contour extérieur après la surface de base (GF) passe à nouveau à la surface intermédiaire bombée (ZF) avec le deuxième point d'inflexion (W2), une troisième dérivée mathématique d'un tracé du contour extérieur (AK) du premier plan de membrure (SP1) au premier point d'inflexion (W1) ayant un signe différent du deuxième point d'inflexion (W2) et le contour extérieur (AK) ne présentant pas d'autres points d'inflexion.

10. Coque de navire (10) selon l'une des revendications 3 à 9 avec l'hélice de navire (12), l'extension transversale de l'élévation (LR) perpendiculairement à la direction longitudinale de la coque de navire (10) étant déterminée en fonction d'une largeur de l'hélice de navire (12), l'extension transversale de l'élévation (LR) étant notamment au maximum égale à 1/3 d'une largeur de la coque de navire (10).

11. Coque (10) selon la revendication 10, dans laquelle l'extension transversale de l'élévation (LR) adopte une valeur comprise entre 80 % et 150 % de la largeur de l'hélice (12), et est notamment supérieure de 15 à 25 %, de préférence de 20 %, à la largeur de l'hélice (12).

12. Coque de navire (10) selon l'une des revendications 1 et 3 à 11, dans laquelle le contour extérieur (AK) dans le premier plan de membrure (SP1) et/ou le contour extérieur (AK) dans le deuxième plan de membrure (SP2) présente, le long d'une direction transversale de la coque de navire (10), de part et d'autre de l'élévation (LR), respectivement un deuxième creux (V2) avec un neuvième point d'inflexion (W9) et un dixième point d'inflexion (W10).

13. Coque (10) selon l'une des revendications 7 à 12, dans laquelle, à l'extrémité arrière de l'élévation (LR), le long de la section longitudinale (LS) en direction de la poupe (16), une position verticale de la surface arrière s'aligne sur la position verticale de l'élévation (LR) .
